# EUROPEAN PATENT SPECIFICATION

(11) **EP 2 026 200 B1**
(45) Date of publication and mention of the grant of the patent: **11.08.2010**
(21) Application number: 07253294.8
(22) Date of filing: 21.08.2007
(51) Int. Cl.: G06F 9/318

(54) **Configurable fuse mechanism for implementing microcode patches**
Konfigurierbarer Fusionsmechanismus zur Implementierung von Microcode-Patches
Mécanisme de fusible configurable pour la mise en application de timbres à microcode

(30) Priority: 24.07.2007 US 782105
(43) Date of publication of application: 18.02.2009
(73) Proprietor: VIA Technologies, Inc., Taipei 231 (TW)
(72) Inventor: Glenn, Henry G., Austin, TX 78746 (US); Parks, Terry, Austin, TX 78737 (US)
(74) Representative: Rees, Simon John Lewis

(56) References cited:
- EP-A- 0 469 239
- US-A- 4 940 909
- US-A- 6 118 306
- US-A1- 2002 120 810
- US-A1- 2005 041 507
- US-A1- 2007 133 267

## Description

### BACKGROUND OF THE INVENTION

### FIELD OF THE INVENTION

This invention relates in general to the field of microelectronics, and more particularly to an apparatus and method for performing microcode patches in a microprocessor.

### DESCRIPTION OF THE RELATED ART

Present day microprocessors are designed to execute many instructions per clock cycle and provide many features to maximize the number of instructions that are executed during any given clock cycle. A clock cycle is generally considered to be that interval of time which is allocated for each of the pipeline stages in the microprocessor to perform the processing work that is required in order to forward results to the next pipeline stage. And present day microprocessors comprise many pipeline stages, a number of which are configured in parallel, to allow for simultaneous, or concurrent processing tasks, thus enabling multiple instructions to be executed in parallel. A core clock signal is provided to each of the pipeline stages in order to synchronize instruction execution in each of the stages. The core clock signal is often a multiple in frequency of a bus clock signal which is provided from an external clock generator circuit.

As one skilled in the art will appreciate, the major stages of a present day pipeline microprocessor may be divided into those associated with fetching instructions (i.e., fetch stage logic) from memory, translating the instructions (i.e., translate stage logic) into associated sequences of micro instructions that are unique to (i.e., "native to") the specific microprocessor, executing (i.e., execution stage logic) the associated sequences of micro instructions, and writing (e.g., write back stage logic) the results of the executions to designated locations.

The aforementioned fetch and translate stages are described within the context of a present day complex instruction set computer (CISC) that employs macro instructions, such as are exhibited by the ubiquitous x86 instruction set architecture (ISA). A single macro instruction is employed to specify a number of lower-level hardware operations, and thus it is well understood in the art that a macro instruction which has been fetched from memory (e.g., external system memory or cache memory) must first be converted into a corresponding sequence of micro instructions (also known as "native instructions") that each specify one or more of the lower-level operations. Following this conversion, the micro instructions are dispatched to various execution stage units for execution, often in parallel, whereby results are generated or the specified lower-level operations are performed.

Consequently, significant attention in the art has been devoted to developing very fast and efficient mechanisms for converting macro instructions into associated micro instruction sequences and for optimally dispatching micro instructions to execution stage resources. A number of different approaches exist for performing the conversion operations, but most of the approaches typically can be characterized by a combination of direct conversion (i.e., "translation") by hardware and indexed storage in a read-only memory (ROM). Direct translation resources are often referred to as translators, decoders, translate logic, and the like, and indexed storage resources are referred to as microcode ROM or micro instruction ROM.

For example, a given macro instruction that specifies a very simple operation may only undergo direct translation by a translator, and will be converted into perhaps one or two associated micro instructions, while another macro instruction that specifies a very complex operation (e.g., a trigonometric function) may be translated into a single micro instruction that specifies an address in the microcode ROM (i.e., a "microcode ROM entry point") where a sequence consisting of hundreds of sequential micro instructions is stored, and where each of the micro instructions in the sequence prescribes a lower-level operation that is required to perform the complex operation.

As one skilled in the art will appreciate, it is the complex sequences of micro instructions that are stored in the microcode ROM which are more prone to error. As new microprocessors are designed and fabricated, it is incumbent upon system architects to provide techniques that allow these errors to be detected and corrected in a manner that minimizes the overall impact of the change. Techniques for detecting these errors prior to placing a part into mass production would perhaps sacrifice instruction throughput and speed of a given part for a wide degree of flexibility in the lab or debug environment. For example, it is often advantageous to provide mechanisms for simulating and testing the effects of microcode changes in the lab on a new design prior to committing these changes to silicon. Alternatively, correction of microcode errors in a fabricated part would seek to prioritize the speed and throughput of the part over flexibility in terms of options provided for making the corrections. In addition, if microcode errors are detected following shipment of parts, it is also desirable to provide techniques for distributing the corrections to end users in a way that the end users can implement the corrections in the field. Such corrections are commonly called patches, microcode patches, field ECs (i.e., "engineering changes"), and other like terms.

A desirable approach for effecting microcode patches is to simply substitute, or replace, a given microcode instruction with one or more substitute microcode instructions. Accordingly, when the given microcode instruction is accessed in the microcode ROM, it is detected and its corresponding replacement microcode instructions are then substituted therefor. In theory, this approach is straightforward. But in practice, providing mechanisms for microcode patches is very complex because of a requirement that the throughput of a part not be disadvantageously affected in its operating environment.

In U.S. Patent 6,438,664, McGrath et al. discuss the advantages and disadvantages of numerous microcode patch approaches to include fetching the replacement microcode from external memory at the instant when the offending microcode is encountered and fetching it prior to encountering the offending microcode. When fetched prior to encountering the offending microcode, the replacement microcode is stored in a volatile location and is substituted for the offending microcode when required. McGrath et al. additionally provide an amount of random access memory (RAM) in a processor for implementing microcode patches. The RAM is loaded with patches from external memory during operation of the processor and when a microcode line is accessed from the microcode ROM for which a patch is enabled, the patch is then fetched from the RAM and is executed instead of the microcode line. McGrath teaches several match registers within which are stored microcode ROM addresses which have associated patches in RAM. When a matching address is found, control is then passed to the RAM for substitution. McGrath et al. further note that while this approach is advantageous, it is also limiting in that switching control from the microcode ROM to the RAM causes a two-cycle bubble in the pipeline. That is, microcode patches according to the technique disclosed by McGrath et al. are provided at the cost of performance and throughput.

Consequently, it is desirable to provide an apparatus and method for executing a microcode patch that does not introduce delay into the pipeline stages of a microprocessor. It is furthermore desirable to provide a mechanism for performing real-time microcode substitutions where a replacement micro instruction is substituted for a micro instruction in microcode ROM without impacting performance of the microprocessor.

It is also desirable to provide a technique for implementing microcode patches that replace a single microcode ROM instruction with more than one substitute micro instruction, that is, a one-to-many microcode patch, where no additional delay is introduced as a result of accessing the microcode patch.

It is furthermore desirable to provide a flexible mechanism for accessing microcode patches which are stored in external memory that minimizes the impact to the microprocessor design for accessing the patches, and that allows for interlacing of macro and micro instructions in the substitute code. Such a mechanism would be very advantageous for use during debug of a microprocessor design and for simulation of proposed microcode routines corresponding to complex operations.

Additionally, it is desirable to provide a technique for loading microcode patches into a microprocessor from an external source that does not require execution of instructions by the microprocessor.

It is moreover desirable to provide a mechanism that enables microcode patches to be programmed during fabrication of a part so that they can be loaded prior to the execution of instructions and additional techniques for expanding the capacity of microcode patch circuitry so that greater numbers of microcode patches can be implemented.

US 2002/0120810 discloses a method and system for overriding selected ROM code functions or adding new ROM code functions within a processing system. A patch or new code function is loaded into a first memory, and upon system boot-up a loader module transfers any patches or new code functions within the first memory into a second memory that is memory-mapped to the ROM.

US 6118306 discloses a system including a component that includes a clock generator that generates an internal clock running at a frequency. Storage elements containing different values are selectable to set the clock frequency. The storage elements include fuse banks and input pins.

### SUMMARY OF THE INVENTION

The present invention, among other applications, is directed to solving the above-noted problems and addresses other problems, disadvantages, and limitations of the prior art. The present invention provides a superior technique for expanding the capacity of a microprocessor to implement microcode patches. In one embodiment, a patch apparatus in a microprocessor is provided. The patch apparatus includes a plurality of fuse banks, one or more configuration fuse banks, and an array controller. The plurality of fuse banks is configured to store associated patch records that are employed to patch microcode or machine state circuits in the microprocessor or to store associated control data entities that are employed to program control circuits in the microprocessor. The one or more configuration fuse banks is encoded to indicate whether each of the plurality of fuse banks is programmed with one of the associated patch records or with one of the associated control data entities. The array controller is coupled to the plurality of fuse banks, and is configured to read the plurality of fuse banks, and is configured to provide the associated patch records to a patch loader or the associated control data entities to control circuits in the microprocessor. The patch loader provides patches corresponding to the associated patch records, as prescribed, to designated target patch mechanisms in the microprocessor. The patch loader provides the patches to the designated target patch mechanisms following transition of a microprocessor reset signal and prior to execution of instructions stored in a BIOS ROM.

One aspect of the present invention contemplates a patch apparatus in a microprocessor, for providing patches during fabrication of the microprocessor. The patch apparatus includes a plurality of fuse banks, one or more configuration fuse banks, and an array controller. The plurality of fuse banks is configured to store associated patch records that are employed to patch microcode or machine state circuits in the microprocessor or to store associated control data entities that are employed to program control circuits in the microprocessor, where each of the plurality of fuse banks comprises 64 fuses, and where each of the 64 fuses corresponds to a bit in a patch record, and where the plurality of fuse banks are programmed during fabrication of the microprocessor. The one or more configuration fuse banks is encoded to indicate whether each of the plurality of fuse banks is programmed with one of the associated patch records or with one of the associated control data entities. The array controller is coupled to the plurality of fuse banks, and is configured to read the plurality of fuse banks, and configured to provide the associated patch records to a patch loader or the associated control data entities to control circuits in the microprocessors, where the patch loader provides the patches corresponding to the associated patch records, as prescribed, to designated target patch mechanisms in the microprocessor. The patch loader provides the patches to the designated target patch mechanisms following transition of a microprocessor reset signal and prior to execution of instructions stored in a BIOS ROM.

Another aspect of the present invention comprehends a method for selectively providing patches or control data during fabrication of a microprocessor. The method includes programming a plurality of fuse banks during fabrication of the microprocessor to store associated patch records that are employed to patch microcode or circuits in the microprocessor, or to store associated control data entities that are employed to program control circuits in the microprocessor; encoding one or more configuration fuse banks during fabrication of the microprocessor to indicate whether each of the plurality of fuse banks is programmed with one of the associated patch records or with one of the associated control data entities; following transition of a microprocessor reset signal and prior to execution of instructions stored in a BIOS ROM, reading the plurality of fuse banks and the one or more configuration fuse banks; and providing patches corresponding to the associated patch records, as prescribed, to designated target patch mechanisms in the microprocessor, and programming the control circuits.

### BRIEF DESCRIPTION OF THE DRAWINGS

These and other objects, features, and advantages of the present invention will become better understood with regard to the following description, and accompanying drawings where:
FIGURE 1 is a block diagram illustrating a prior art mechanism for implementing microcode patches in a microprocessor;
FIGURE 2 is a block diagram showing details of a translate stage in a microprocessor according to the present invention;
FIGURE 3 is a block diagram depicting a real-time microcode patch apparatus according to the present invention;
FIGURE 4 is a flow chart featuring a method according to the present invention for making real-time microcode patches;
FIGURE 5 is a block diagram showing an apparatus according to the present invention for performing a one-to-many microcode patch;
FIGURE 6 is a flow chart illustrating a method for performing a one-to-many microcode patch according to the present invention;
FIGURE 7 is a block diagram detailing an apparatus according to the present invention for performing a microcode patch from memory;
FIGURE 8 is a diagram illustrating an exemplary wrapper instruction format according to the present invention;
FIGURE 9 is a diagram showing an example of translator bypass code according to the present invention.
FIGURE 10 is a block diagram illustrating a microcode patch expansion mechanism according to the present invention;
FIGURE 11 is a block diagram showing details of a patch RAM overlay technique as employed in a microprocessor according to the present invention;
FIGURE 12 is a block diagram depicting a mechanism for implementing a microcode patch during fabrication;
FIGURE 13 is a table showing exemplary meanings of the states of fuses within fuse bank 0 in the fuse array of FIGURE 12; and
FIGURE 14 is a block diagram showing fields within an exemplary patch bank record according to the present invention;

### DETAILED DESCRIPTION

The following description is presented to enable one of ordinary skill in the art to make and use the present invention as provided within the context of a particular application and its requirements. Various modifications to the preferred embodiment will, however, be apparent to one skilled in the art, and the general principles defined herein may be applied to other embodiments. Therefore, the present invention is not intended to be limited to the particular embodiments shown and described herein, but is to be accorded the widest scope consistent with the principles and novel features herein disclosed.

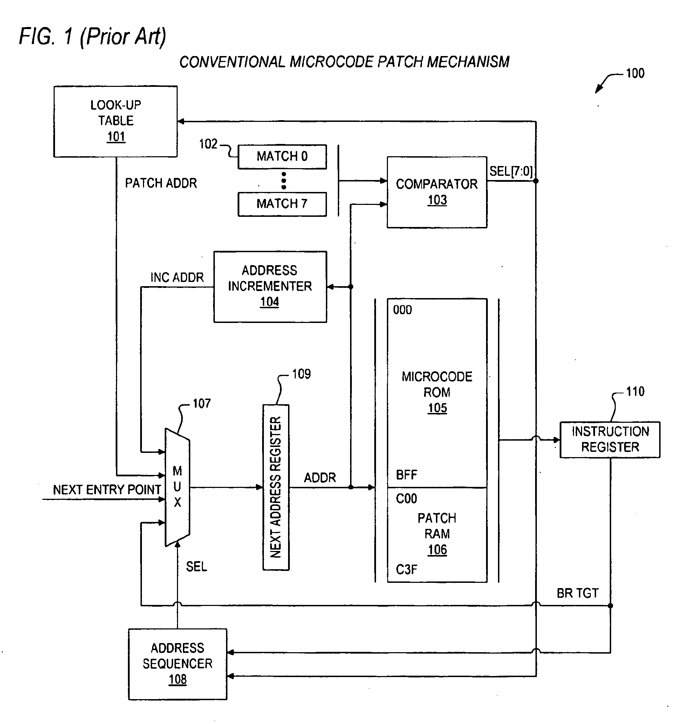

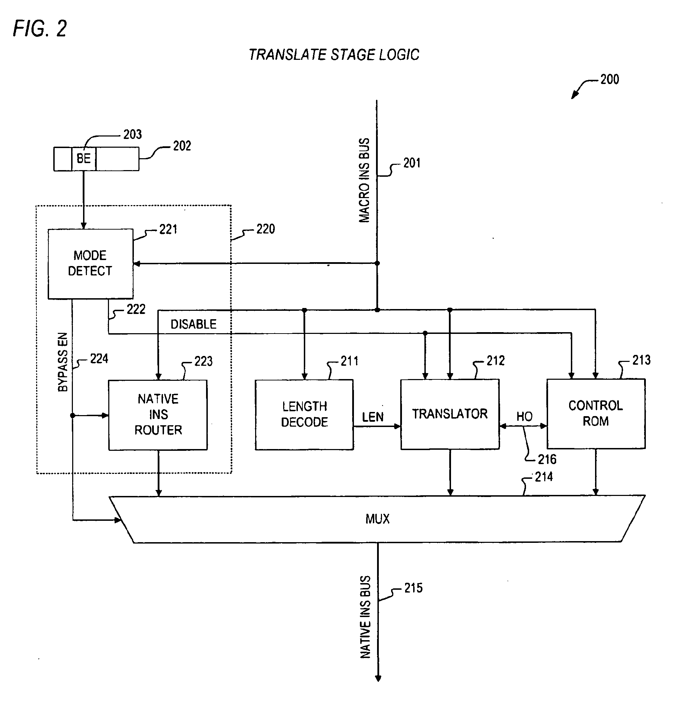

In view of the above background discussion on mechanisms for making microcode patches within a present day microprocessor, a discussion highlighting the limitations of these mechanisms will be provided with reference to FIGURE 1. Following this, a discussion of the present invention will be presented with reference to FIGURES 2-14. The present invention provides a flexible and efficient technique for programming and implementing patches to microcode ROM in a microprocessor. The invention is flexible with regard to the environment in which patches are to be executed, and the mechanism for implementing the patches is significantly faster than that which has heretofore been provided.

Turning to FIGURE 1, a block diagram is presented illustrating a prior art mechanism 100 for implementing microcode patches in a microprocessor. The block diagram depicts a conventional microcode patch mechanism 100 such as might be provided within the translate stage of a present day microprocessor. The mechanism 100 includes a microcode ROM 105 that is coupled to a patch RAM 106. For purposes of discussion, the RAM 106 is configured to store replacement micro instructions within the upper 64 locations of a microcode storage address space ranging from address 0x000 through 0xC3F. Hence, the upper 64 locations of the microcode address space are configured as RAM 106 as opposed to ROM 105. The microcode address space 0x000-0xC3F is accessed by a microcode address bus ADDR and the ROM 105 and RAM 106 output indexed micro instruction sequences to an instruction register 110. The instruction register 110 provides micro instructions to subsequent stages (not shown) in the microprocessor for execution.

The address bus ADDR receive a microcode address from a next address register 109, whose input is coupled to the output of a mux 107. One of four mux inputs are selected as the mux output. The mux inputs are an incremented address that is generated by an address incrementer 104, a next entry point address, a branch target address, and a patch address. The address incrementer 104 increments a previous microcode address provided on bus ADDR to enable indexing of a micro instruction in a next sequential microcode address location, such as may be employed in sequences of micro instructions. The branch target address is provided from a branch target field of the instruction currently in the instruction register 110 to enable branches in microcode ROM 105 to be performed. The next entry point is the location in microcode ROM 105 containing micro instructions corresponding to a following micro instruction sequence. And the patch address is the location in microcode RAM 106 of a substitute micro instruction to replace an existing micro instruction stored in microcode ROM 105. An address sequencer 108 is coupled to the instruction register 110 and generates a select bus value which directs the mux 107 to select one of its four inputs. The address sequencer 108 determines what type of micro instruction is in the instruction register 110. If the micro instruction has a following micro instruction stored in microcode ROM 105 or RAM 106, then SEL is configured to direct the mux 107 to select the incremented address input. If the micro instruction is a branch instruction, then SEL is configured to direct the mux 107 to provide the branch target address to the next address register 109. If the micro instruction is the last micro instruction in a micro instruction sequence, then the address sequencer 108 directs the mux 107 via SEL to provide the next entry point address to the next address register. Typically, the next entry point address is generated by a direct translator (not shown) that has translated a following macro instruction. For clarity, interaction with the translator is not depicted.

The mechanism 100 also depicts eight match registers 102, each of which is coupled to a comparator 103. In addition, the comparator 103 receives the microcode address ADDR which is provided from the next address register 108. The comparator 103 outputs a select bus SEL[7:0] that selects one of eight entries in a look-up table 101 and which is also coupled to the address sequencer 108 to indicate that a microcode address has been detected for which a patch is implemented. Each of the eight entries in the look-up table 101 is a microcode patch address provided on bus PATCH ADDR as an input to the mux 107.

The configuration is FIGURE 1 is typical of the mechanisms presently available for performing microcode patches, and is substantially similar to the configuration disclosed in U.S. Patent 6,438,664. In operation, a microcode sequence within the ROM 105 is configured to load the match registers 102, the lookup table 101, and the patch ROM 106 from external memory (not shown) via instructions contained in the basic input/output system (BIOS) or which are executed by the operating system following power-up or reset of the processor. Consequently, when the next microcode address on bus ADDR matches the contents of one of the loaded match registers 102, then the comparator 103 sets SEL[7:0] to (1) select the corresponding patch address in the lookup table 101, and to (2) indicate to the address sequencer 108 that the current contents of the next address register 109 (i.e., the offending microcode address) are to be replaced by the patch address provided by the look-up table 101. Accordingly, the address sequencer 108 changes the value of SEL to select the patch address for input to the next instruction register 109, and thus the patch address is provided from the next instruction register 109, thus indexing the entry point in the patch RAM 106 for the replacement micro instructions, which are subsequently output to the instruction register 110.

The configuration of FIGURE 1 is useful for implementing microcode patches via field ECs and is easily loaded through instructions executed in BIOS or in the operating system itself by any of the known techniques. But as McGrath et al. note, and as the present inventors have likewise observed, any time a micro instruction substitution must occur (i.e., when the comparator 103 indicates a match), the address currently output from the next address register must be replaced with a patch address fetched from the look-up table 101, prior to accessing the corresponding microcode instruction. McGrath et al. note that this introduces a two-cycle delay into the pipeline. And the present inventors have observed that such a delay is not acceptable under most operating conditions, and when viewed from a performance perspective, the introduction of any delay into the pipeline is highly disadvantageous. Thus, present day microcode patch techniques are limiting in that they throttle performance.

The present invention overcomes the above noted limitations by providing a microcode patch apparatus and method that does not introduce any additional pipeline delay as a result of accessing the patch, thus enabling one-to-one and one-to-many patches to be implemented without impacting processor throughput. The present invention also provides a flexible mechanism for implementing patches which can be tailored to provide for pure performance at the expense of flexibility, slight performance impact with greater flexibility, or maximum flexibility for purposes of simulation and debug. The present invention will now be discussed with reference to FIGURES 2-9.

Turning now to FIGURE 2, a block diagram is presented showing details of a translate stage 200 in a microprocessor according to the present invention. The translate stage 200 is configured to support one-to-one microcode patch operations, one-to-many patch operations, and is also flexible to provide for the fetching and execution of micro instructions which are stored in system memory. In accordance with the present invention, a one-to-one microcode patch operation is an operation where the contents of a single microcode ROM location are replaced. For example, replacement of a 38-bit microcode ROM output retrieved from microcode ROM address 0x001E with a 38-bit substitute is considered to be a one-to-one microcode patch, regardless of whether the 38-bit output is an explicit micro instruction, concatenated micro instructions, or an encoding of a plurality of micro instructions. Likewise, a one-to-many microcode patch operation is where the contents of a single microcode ROM location are replaced with more than one substitute. In the example above, replacing the 38-bit microcode ROM output with, say, three 38-bit substitutes is considered to be a one-to-many microcode patch. The translate stage 200 includes a macro instruction bus 201 that distributes instructions fetched by fetch stage logic (not shown) from system memory (not shown).

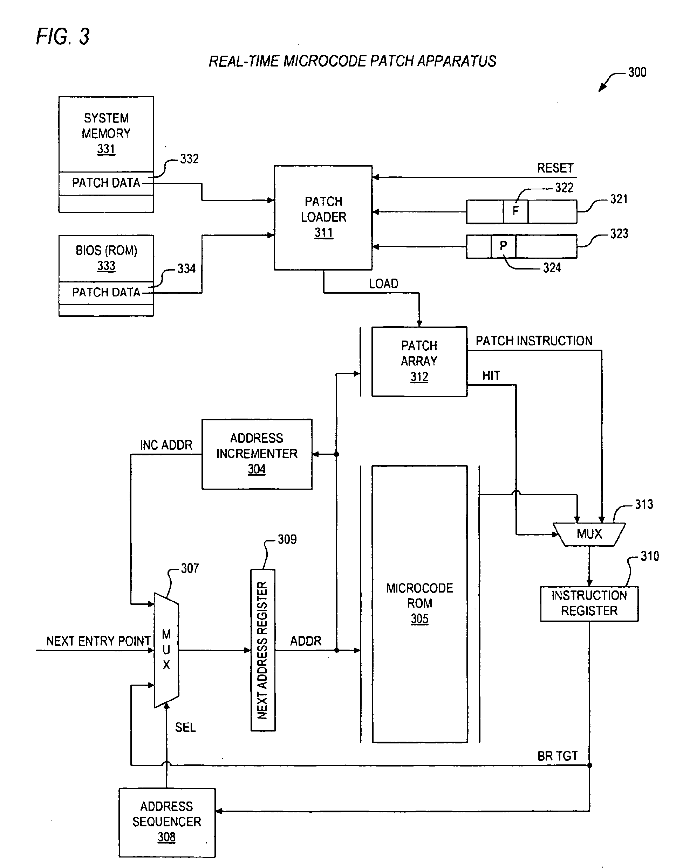

The macro instructions are distributed to bypass logic 220, an instruction length decoder 211, a translator 212, and a control ROM 213. The control ROM 213 includes provisions for indexing and sequencing micro instructions from an internal microcode ROM as described above, and for performing one-to-one and one-to-many microcode patches in real time, as will be described in more detail below with reference to FIGURES 3-7. Within the bypass logic 220, macro instructions are provided to mode detection logic 221 and to a native instruction router 223. The mode detector 221 provides two signals comprising a bypass signal group, BYPASS EN 224 and DISABLE 222. DISABLE 222 is routed to the length decoder 211, the translator 212, and the control ROM 213. BYPASS EN 224 is provided as a control signal to a mux 214. Micro instruction outputs from the native instruction router 223, the translator 212, and the control ROM 213 are provided as inputs to the mux 214. The mux 214 is controlled by BYPASS EN 224 to allow either all three micro instruction inputs to propagate to a native instruction bus 215 or to disable the output of the native instruction router 223 from propagating through to the native bus 215. To preclude contention, the native instruction router 223, translator 212, and control ROM 213 are controlled via the DISABLE signal 222 and signal HO 216 to exclusively present only one micro instruction input to the mux 214 at any given time.

The translation stage 200 according to the present invention is configured to perform the functions and operations as described above. The translation stage 200 comprises digital logic, analog logic, circuits, devices, or machine specific instructions, or a combination of digital logic, analog logic, circuits, devices, or machine specific instructions, or equivalent elements that are employed to perform the aforementioned functions and operations according to the present invention. The elements employed to perform the functions and operations within the translation stage 200 may be shared with other circuits, microcode, etc., that are employed to perform other functions and operations within the microprocessor. According to the scope of the present application, machine specific instructions is a term employed to refer to one or more machine specific instructions. A machine specific instruction is an instruction at the level that a unit executes. For example, machine specific instructions are directly executed by a reduced instruction set computer (RISC) microprocessor. For a complex instruction set computer (CISC) microprocessor such as an x86-compatible microprocessor, x86 instructions are translated into associated machine specific instructions, and the associated machine specific instructions are directly executed by a unit or units within the CISC microprocessor.

In a normal operating mode, macro instructions from an application program are fetched from external memory by the fetch stage and are provided over the macro instruction bus 201. Because macro instructions typically do not conform to a fixed length standard, the length decoder 211 evaluates the byte stream over the bus 201 to determine the length in bytes of each macro instruction. In one embodiment, the length in bytes of each macro instruction is provided to the translator 212 via a length bus LEN. The translator 212 accordingly retrieves the number of indicated bytes from the macro instruction bus 201. If a retrieved macro instruction is to be directly translated by the translator 212, then the translator 212 performs the translation of the macro instruction into associated native instructions. The native instructions are then provided from the translator 212 to the mux 214. If the retrieved macro instruction is to be decoded by the control ROM 413, then the translator 212 generates a corresponding microcode ROM entry point address and directs the control ROM 213 to retrieve the micro instructions from the microcode ROM therein by providing the entry point address to the control ROM 213 via a handoff bus HO. The control ROM 213 subsequently fetches the corresponding micro instructions from its internal microcode ROM and provides these micro instructions to the mux 214. Hence, in normal operating mode, the translator 212 or the control ROM 213 sources micro instructions to the native instruction bus 215 via the mux 214.

In one embodiment, the translate stage logic 200 is configured to access a machine specific register 202 that includes a bypass mode enable BE bit 203. The machine specific register 202 is not architecturally visible to the application programmer, but can be written through special procedures via an encrypted interface. For purposes of this application, it is sufficient to note that asserting the BE bit 203 places the microprocessor in a translator bypass mode and deasserting the BE bit 203 restores the microprocessor to normal operating mode.

During normal operation, a mode detector 221 within the bypass logic 220 monitors the state of the BE bit 203 and instructions appearing over the bus 201. If the BE bit 203 is asserted, then the mode detector 221 asserts BYPASS EN 224, thus enabling native instructions to be routed from the native instruction router 223 through the mux 214 to the native instruction bus 215 as well as native instructions which are provided by the translator 212 and control ROM 213. In one embodiment, DISABLE 222 inhibits the translator 212 and the control ROM 213 from performing instruction translation functions for a corresponding macro instruction that is fetched from the macro instruction bus 201. Consequently, when the translation stage 200 is operating in normal operating mode (i.e., the BE bit 203 is deasserted), the bypass logic 220 deasserts the bypass enable signal 224, thus disabling the native instruction router 223, and directing the mux 214 to select native instructions from either the translator 212 or the control ROM 213 for execution. When the translation stage 200 is placed in bypass mode (i.e., the BE bit 203 is asserted), then the bypass logic 220 asserts the bypass enable signal 224, thus enabling the native instruction router 223 and the mode detector 221.

In bypass mode, the mode detector controls the state of DISABLE 222. When DISABLE is deasserted, then the native instruction router 223 is disabled and the translator 212, and control ROM 213 operate as in normal mode. Macro instructions are fetched from the macro instruction bus 201 and are translated or retrieved by the control ROM 213. In this mode, however, a programmer may interlace native instructions within a macro instruction flow stored in memory by encapsulating the native instructions in a special "wrapper" macro instruction which is detected by the mode detector 221. In one embodiment, the wrapper macro instruction is an unused or invalid macro instruction which would otherwise cause an exception. Advantageously then, a debugger may place the microprocessor according to the present invention into a native bypass mode by setting the BE bit 203, but may continue to use all the macro instructions within the particular ISA. And to support debug or simulation functions, the programmer may employ the wrapper macro instruction to embed a native instruction therein, thus enabling programmable access to native resources which would not otherwise be made available. For instance, many native resources (e.g., temporary storage registers, counters, state indicators, etc.) within a microprocessor according to the present invention are employed during the execution of macro instructions, but are not accessible. Yet when the microprocessor is in bypass mode, the native instructions that provide access to these native resources may be interlaced among the macro instructions via use of the wrapper instruction.

In bypass mode, the mode detector 221 monitors instructions retrieved from the macro instruction bus 201. When a wrapper instruction is detected, the mode detector asserts DISABLE, thus enabling the native instruction router 223 and disabling the translator 212 and control ROM 213. When enabled, the native instruction router 223 strips the native instruction from within the wrapper macro instruction and routes the native instruction to the mux 214, and thus to the native instruction bus 215. In one embodiment, all native instructions are of a fixed number of bits. In a specific embodiment, native instructions are 38 bits. In one embodiment, the native instructions provided via the wrapper instruction, and those provided via the translator 212 and control ROM 213 as well, comprise an encoding of one or more machine specific instructions, which are subsequently translated into the one or more machine specific instructions by a machine specific translator ("microtranslator"), that is coupled to the native instruction bus 215. The machine specific instructions are provided by the microtranslator (not shown) to subsequent pipeline stages for execution. A more traditional embodiment contemplates native instructions provided via the wrapper instruction, translator 212, and control ROM 213 which are directly provided to subsequent pipeline stages for execution.

Now turning to FIGURE 3, a block diagram is presented depicting a real-time microcode patch apparatus 300 according to the present invention. The patch apparatus 300 may be embodied within control ROM logic operating in either normal or native bypass mode, such as the control ROM 213 shown in FIGURE 2. The real-time microcode patch apparatus 300 is configured to perform one-to-one microcode patch operations in the same number of clock cycles that are normally required to fetch micro instructions. That is, the present invention is configured to perform a one-to-one microcode patch without introducing any additional delay into a microprocessor pipeline.

The one-to-one patch apparatus 300 includes a microcode ROM 305. In one embodiment, the microcode ROM has 20,480 (0x5000) 38-bit entries, and is disposed within a 32K-location microcode address space. Other embodiments are also contemplated. The microcode address space is accessed by a microcode address bus ADDR and the microcode ROM 305 provides micro instruction sequences as indexed by the value of ADDR to a mux 313. The output of the mux 313 is coupled to an instruction register 310. The instruction register 310 provides micro instructions to subsequent stages (not shown) in the microprocessor for execution. In one embodiment, the micro instructions are a plurality of machine specific instructions which have been encoded into a 38-bit entity. In this embodiment, contents of the instruction register 310 are provided to a microtranslator (not shown) for decoding of the encoded entities into machine specific instruction and for dispatch of the machine specific instructions to functional units in the pipeline.

The address bus ADDR receives a microcode address from a next address register 309, whose input is coupled to the output of a mux 307. One of three mux inputs are selected as the mux output. The mux inputs are an incremented address INC ADDR that is generated by an address incrementer 304, a next entry point address NEXT ENTRY POINT, and a branch target address BR TGT. The address incrementer 304 increments a previous microcode ROM address provided on bus ADDR to enable indexing of a micro instruction in a next sequential microcode address location, such as may be employed in sequences of micro instructions. The branch target address is provided from a branch target field of a micro instruction currently in the instruction register 310 to enable branches in microcode ROM 305 to be performed. These types of branches are also referred to as microcode branches. The next entry point is the location in the microcode ROM 305 containing micro instructions corresponding to a following micro instruction sequence such as may be associated with a next macro instruction. In one embodiment, the next entry point is provided to the patch apparatus via a handoff bus from a translator according to the present invention, such as the translator 212 and handoff bus 216 discussed above with reference to FIGURE 2. An address sequencer 308 is coupled to the instruction register 310 and generates a value on bus SEL which directs the mux 307 to select one of its three inputs. The address sequencer 308 determines what type of micro instruction is in the instruction register 310. That is, if the micro instruction has a following micro instruction stored in microcode ROM 305, then SEL is set to direct the mux 307 to select the incremented address input. If the micro instruction is a branch instruction, then SEL is configured to direct the mux 307 to provide the branch target address to the next address register 309. If the micro instruction is the last micro instruction in a micro instruction sequence, then the address sequencer 308 directs the mux 307 via SEL to provide the next entry point address to the next address register. In one embodiment, the translator may directly translate one or more initial micro instructions and provide these for execution while providing a next entry point to the mux 307 for access of the remaining micro instructions in a microcode sequence.

The microcode patch apparatus 300 also includes a patch array 312 that is coupled to the microcode address bus ADDR, and which generates a patch instruction output PATCH INSTRUCTION and a hit output HIT. In one embodiment, the patch array 312 is a fast associative array providing for lookup of up to 32 entries based upon the value of ADDR. In another embodiment the patch array 312 comprises a content-addressable memory (CAM) comprising 32 entries. As one skilled in the art will appreciate, a CAM is configured to be supplied with a data entity input (i.e., the contents of the next address register 309 in this embodiment) and then performs an extremely fast search of its entire contents (i.e., 32 entries) to determine if there is an entry corresponding to the provided input. If so, then the CAM outputs an associated piece of data. According to the present invention, the associated piece of data is a patch instruction corresponding to the provided address. The patch instruction is output to the mux 313 and signal HIT is asserted. HIT is coupled to a select input of the mux 313. When HIT is not asserted, the mux 313 is directed to select the microcode ROM output. When HIT is asserted, the mux 313 is directed to select the patch instruction for routing to the instruction register 310 rather than the micro instruction output by the microcode ROM 305.

Consequently, the accessing of micro instructions corresponding to the supplied microcode ROM address on ADDR is performed by the patch array 312 concurrent with access in the microcode ROM 305, and the microcode patch instruction is provided to the mux 313 in parallel with the output of the microcode ROM 303. Because the patch array 312 is accessed in parallel with the microcode ROM 305, no additional delay is incurred when a one-to-one microcode patch according to the present invention is performed.

The patch apparatus 300 includes a patch loader 311 which is coupled to the patch array 312 via a load bus LOAD and which is operatively coupled to system memory 332 and BIOS ROM 333 via known techniques. The patch loader 311 is coupled to a reset signal RESET, a patch fuse F 322 within a fuse array 321, and is capable of accessing a patch bit P 324 within a machine specific register 323. The patch loader 311 is employed to load the contents of the patch array 312 with patch data 334 located in BIOS 333 or with patch data 332 located in system memory 331, as directed. In one embodiment, following reset or power-up, instructions within the BIOS 333 are executed to direct the patch loader 311 to check the state of the fuse 322. If the fuse 322 is in a state (e.g., not blown or blown) that indicates the patch data 334 should be loaded, then the patch loader 311 is configured to retrieve the patch data 334 from the BIOS ROM 333 and the patch loader 311 loads the patch array 312. In another embodiment, the state of the fuse 322, as detected by instructions in BIOS 333 upon power-up or reset, directs the patch loader 311 to retrieve the patch data from a designated patch data location 332 in system memory 331. In an embodiment that provides for implementation of patches prior to execution of instructions in the BIOS 333, the apparatus 300 is configured to evaluate the state of the fuse 322 following reset, but prior to fetching of instructions from the BIOS 333. If the fuse 322 state indicates that a patch is to be loaded, then the patch loader 311 fetches the patch data 334 from the designated area in the BIOS ROM 333 and loads the data into the patch array 312. After the patch has been loaded, instructions are fetched from BIOS 333 for booting of the microprocessor. This embodiment is advantageous in situations where instructions within the BIOS 333 require a patch in order to properly boot the microprocessor. The embodiment is furthermore advantageous for patching initialization constants and register values which must be at a specified state in order for BIOS 333 to boot the microprocessor properly. In another embodiment, the patch loader 311 monitors the state of the patch bit 324 in the machine specific register 323. In this embodiment, the machine specific register 323 is not architecturally visible, but can be written through special procedures. For example, one embodiment comprehends the capability to write to the register 321 via an encrypted interface that employs privileged instructions. For purposes of this application, it is sufficient to note that when the P bit 324 is asserted, the patch loader 311 is directed to retrieve the patch data 332 from system memory 331 and to load the patch array 312 with patch addresses and patch instructions.

Advantageously, and in contrast to present day microcode patch techniques, the apparatus 300 according to the present invention enables microcode patches to be loaded during power-up/reset, or as a result of executing privileged sequences of instructions. In addition, the present invention overcomes the current limitations in the art by providing a technique whereby patches that have been loaded are substituted on a one-for-one basis in real-time. No additional delay is incurred in the pipeline when microcode patches according to the present invention are executed. Consequently, the apparatus 300 of FIGURE 3 is exceedingly useful when errors are found, say, in one or more bits of a given microcode instruction. Furthermore, any location within the microcode ROM 305 may be patched. That is, if an error is detected within, say, the tenth micro instruction in a sequence of 40 micro instructions corresponding to execution of an operation prescribed by a single macro instruction, then a one-for-one patch instruction may be loaded into the patch array 312 whose address match is the same as the location in the microcode ROM 305 in which the tenth micro instruction is stored.

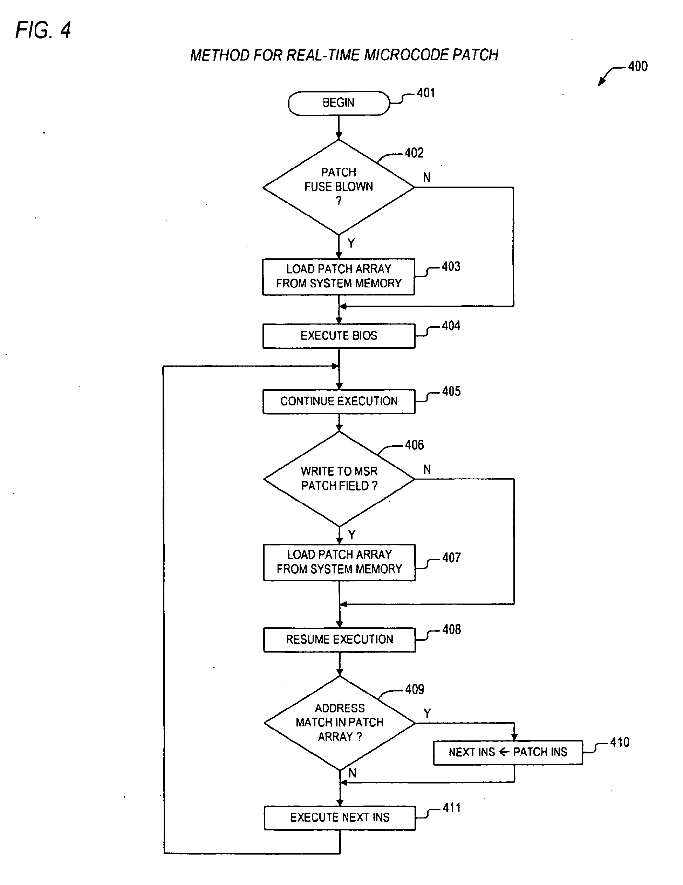

Now referring to FIGURE 4, a flow chart 400 is presented featuring a method according to the present invention for making real-time microcode patches. Flow begins at block 401 where a microprocessor according to the present invention undergoes power-up or reset. Flow then proceeds to decision block 402.

At decision block 402, an evaluation is made to determine if a patch fuse 322 within a fuse array 321 in the microprocessor has been blown. If not, then flow proceeds to block 404. If the fuse 322 has been blown, thus indicating that patch data should be loaded into the patch array 312, then flow proceeds to block 403.

At block 403, a patch loader 311 retrieves the patch data from a designated patch data location 334 in BIOS memory 333 and loads the patch data into the patch array 312. Flow then proceeds to block 404.

At block 404, fetch stage logic begins fetching instructions for execution from BIOS 333 to configure and initialize the microprocessor and processing system. As instructions are executed, flow then proceeds to block 405.

At block 405, instructions within the program flow are successively fetched and executed by the microprocessor. Flow then proceeds to decision block 406.

At decision block 406, an evaluation is made to determine if a patch field 324 within a machine specific register 323 has been set to a state that indicates a patch should be loaded into the patch array 312. If the patch field 324 indicates that a patch should not be loaded, then flow proceeds to block 408. If the patch field 324 indicates that a patch should be loaded, then flow proceeds to block 407.

At block 407, the patch loader 311 retrieves the patch data from a patch data location 332 in system memory 331 and loads the patch data into the patch array 312. Flow then proceeds to block 408.

At block 408, instruction fetch and execution by the microprocessor is continued. Macro instructions are directly translated into micro instructions and/or associated micro instructions are retrieved from microcode ROM 305. The addresses of locations in microcode ROM 305 are provided to the patch array 312 in parallel with provision of the addresses to the microcode ROM 305. Flow then proceeds to decision block 409.

At decision block 409, an evaluation is made to determine if a microcode address provided to the patch array 312 matches an address which was loaded. If not then flow proceeds to block 411. If an address does hit in the array 312, then flow proceeds to block 410.

At block 410, the patch array 312 outputs the patch instruction corresponding to the matched address and asserts signal HIT, thus directing the mux 313 to place the patch instruction into the instruction register 310 rather than the micro instruction retrieved from the microcode ROM 305. Flow then proceeds to block 411.

At block 411, instruction fetch and execution by the microprocessor is continued and flow proceeds to block 405.

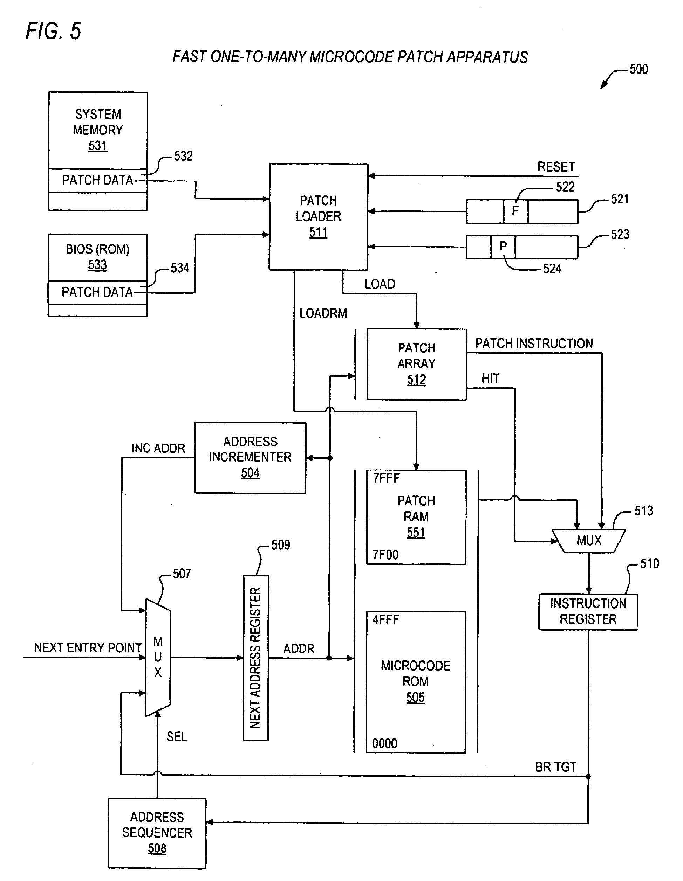

The discussion with reference to FIGURES 3-4 has focused on improvements according to the present invention that provide for one-to-one replacement of microcode instructions without impacting performance. But the present invention is also well suited and useful for performing one-to-many microcode patches, and provides performance benefits over that which has heretofore been provided, such as the technique which has been discussed above with reference to FIGURE 1. A mechanism for performing one-to-many microcode patches will now be discussed with reference to FIGURES 5-6.

Turning to FIGURE 5, a block diagram is presented showing an apparatus 500 according to the present invention for performing one-to-many microcode patch operations. As noted above, a one-to-many microcode patch operation is considered to be the replacement of the contents of a single microcode ROM location (i.e., a micro instruction) with a plurality of micro instructions. The patch apparatus 500 may be embodied within control ROM logic operating in either normal or native bypass mode, such as the control ROM 213 shown in FIGURE 2. In addition, the one-to-many microcode patch apparatus 500 according to the present invention is configured to perform a one-to-many microcode patch where only a single-cycle of delay is introduced into a microprocessor pipeline. The delay results from the execution of a microcode branch operation as the first operation in a one-to-many patch in order to direct fetching of microcode to a patch RAM area of microcode address space, as will be described in further detail below. Advantageously, the one-to-many patch operation according to the present invention provides for a significant improvement in throughput over conventional patch approaches, such as are described above with reference to FIGURE 1.

The one-to-many patch apparatus 500 includes a microcode ROM 505. In one embodiment, the microcode ROM 505 has 20,480 (0x500) 38-bit entries, and is disposed within a 32K-location microcode address space. Other embodiments are also contemplated. The apparatus 500 also includes a microcode patch RAM 551 that occupies a portion of the unused locations in the microcode address space. In one embodiment, the microcode patch RAM 551 comprises 256 38-bit entries and occupies the upper 256 locations (i.e., locations 0x7F00 through 0x7FFF) in the microcode address space. The microcode address space, including both ROM 505 and RAM 551, is accessed by a microcode address bus ADDR and the microcode ROM 505 or microcode RAM 551, as appropriate, provides micro instruction sequences as indexed by the value of ADDR to a mux 513. The output of the mux 513 is coupled to an instruction register 510. The instruction register 510 provides micro instructions to subsequent stages (not shown) in the microprocessor for execution. In one embodiment, the micro instructions are a plurality of machine specific instructions which have been encoded into a 38-bit entity. In this embodiment, contents of the instruction register 510 are provided to a microtranslator (not shown) for decoding and dispatch to functional units.

The address bus ADDR receives a microcode address from a next address register 509, whose input is coupled to the output of a mux 507. One of three mux inputs are selected as the mux output. The mux inputs are an incremented address INC ADDR that is generated by an address incrementer 504, a next entry point address NEXT ENTRY POINT, and a branch target address BR TGT. The address incrementer 504 increments a previous microcode space address provided on bus ADDR to enable indexing of a micro instruction in a next sequential microcode address location, such as may be employed in sequences of micro instructions. The branch target address is provided from a branch target field of a micro instruction currently in the instruction register 510 to enable branches in microcode ROM 505 and/or microcode RAM 551 to be performed. The next entry point is the location in the microcode ROM 505 or microcode RAM 551 containing micro instructions corresponding to a following micro instruction sequence such as may be associated with a next macro instruction. In one embodiment, the next entry point NEXT ENTRY POINT is provided to the patch apparatus 500 via a handoff bus from a translator according to the present invention, such as the translator 212 and handoff bus 216 discussed with reference to FIGURE 2. An address sequencer 508 is coupled to the instruction register 510 and generates a value on bus SEL which directs the mux 507 to select one of its three inputs. The address sequencer 508 determines what type of micro instruction is in the instruction register 510. That is, if the micro instruction has a following micro instruction stored in microcode ROM 505 or microcode RAM 551, then SEL is set to direct the mux 507 to select the incremented address input. If the micro instruction is a branch instruction, then SEL is configured to direct the mux 507 to provide the branch target address to the next address register 509. If the micro instruction is the last micro instruction in a micro instruction sequence, then the address sequencer 508 directs the mux 507 via SEL to provide the next entry point address to the next address register. In one embodiment, the translator may directly translate one or more initial micro instructions and provide these for execution while concurrently providing a next entry point to the mux 507 for access of the remaining micro instructions in a microcode sequence.

Like the one-to-one patch apparatus 300 described above with reference to FIGURES 3-4, the microcode patch apparatus 500 also includes a patch array 512 that is coupled to the microcode address bus ADDR, and which generates a patch instruction output PATCH INSTRUCTION and a hit output HIT. In one embodiment, the patch array 512 is a fast associative array providing for lookup of up to 32 entries based upon the value of ADDR. In another embodiment the patch array 512 comprises a content-addressable memory (CAM) comprising 32 entries. The patch array 512 is supplied with the contents of the next address register 509 and performs an extremely fast search of its entire contents (i.e., 32 entries) to determine is there is an entry corresponding to the provided input. If so, then the patch array 512 outputs a patch instruction corresponding to the provided address. The patch instruction is output to the mux 513 and signal HIT is asserted. HIT is coupled to a select input of the mux 513. When HIT is not asserted, the mux 513 is directed to select the microcode ROM output or microcode RAM output, as appropriate. When HIT is asserted, the mux 513 is directed to select the patch instruction for routing to the instruction register 510 rather than the micro instruction output by the microcode ROM/RAM 505/551.

The patch RAM 551 is a volatile and loadable set of locations within the microcode address space, which are employed to provide for one-to-many microcode patches. When a microcode patch is required that comprises a plurality of micro instructions to replace a single micro instruction that is stored at a particular address in the microcode ROM 505, the replacement plurality of micro instructions is stored, as described below, in a replacement location in RAM 551, where the first micro instruction in the replacement plurality of micro instruction is stored in a first location in the RAM 551, and where a microcode branch instruction, having the first location in the RAM 551 as a branch target address, is loaded into the patch array 512 as data corresponding to the particular address. Consequently, when the particular address of the micro instruction to be patched is supplied on bus ADDR, it is also concurrently supplied to the patch array 512. And while the microcode ROM 505 contents are accessed, the stored microcode branch instruction is provided by the patch array 512 to the mux 513 in parallel with the output of the microcode ROM 505. Since the contents of ADDR resulted in a match in the patch array 512, signal HIT is asserted, and the microcode branch instruction retrieved from the patch array 512 is routed through the mux 513 to the instruction register 510, at no additional delay. The address sequencer 508 notes that a microcode branch instruction is within the instruction register 510 and the branch target address, designating said first location in the patch RAM 551, is input to the mux 507. Thus, the address sequencer 508 directs the mux 507 via SEL to select the branch target address, which is then supplied on ADDR to the microcode address space, and which selects said first location in the microcode RAM 551, that is, the location containing the first micro instruction in the one-to-many microcode patch. Subsequent micro instructions in the patch are accessed from the RAM 551 via incremented addresses provided by the address incrementer 504 until a final micro instruction in the patch sequence is fetched and detected by the address sequencer 508, which responds by directing the mux 507 to select the next entry point. In addition, the patch that is loaded into the RAM 551 may also include a micro instruction that causes a branch back to a location in the microcode ROM 505.

The patch apparatus 500 includes a patch loader 511 that is coupled to the patch array 512 via a load bus LOAD and to the patch RAM 551 via a load RAM bus LOADRM, and which is operatively coupled to system memory 532 and BIOS ROM 533 via known techniques. The patch loader 511 is coupled to a reset signal RESET, a patch fuse F 522 within a fuse array 521, and is capable of accessing a patch bit P 524 within a machine specific register 523. The patch loader 511 is employed to load the contents of the patch array 512 and the patch RAM 551 with patch data 534 located in BIOS 533 or with patch data 532 located in system memory 531, as directed.

Operationally, loading of the patch array 512 and patch RAM 551 are performed in substantially the same manner as the patch array 312 is loaded within the apparatus 300 of FIGURE 3, the difference being that the supplied patch data 532, 534 includes data for loading both the array 512 and the RAM 551 and that the patch loader 511 loads both the array 512 and the RAM 551, as similarly described above for like numbered elements with reference to FIGURE 3, responsive to the state of the fuse 522, the instructions for loading contained in BIOS 533, and the state of the patch bit 524 within the machine specific register 523.

Consequently, the apparatus 500 according to the present invention enables one-to-many microcode patches to be loaded during power-up/reset, or during the execution of instructions which are not typically architecturally provided for, and provides for accessing the one-to-many microcode patch in a manner significantly faster than present day techniques. The apparatus 500 of FIGURE 5 is very useful when errors are found that require a plurality of micro instructions as a patch to replace a micro instruction that has been burned into microcode ROM 505. In addition, the one-to-many apparatus 500 enables proposed one-to-many microcode patches to be easily implemented in a manner that minimizes the performance impact of the patches. Furthermore, the method for affecting a one-to-many patch according to the present invention remains consistent with that required for a one-to-one patch, where a one-to-one patch simply substitutes an microcode branch to the target address in RAM 551 that contains the one-to-many patch.

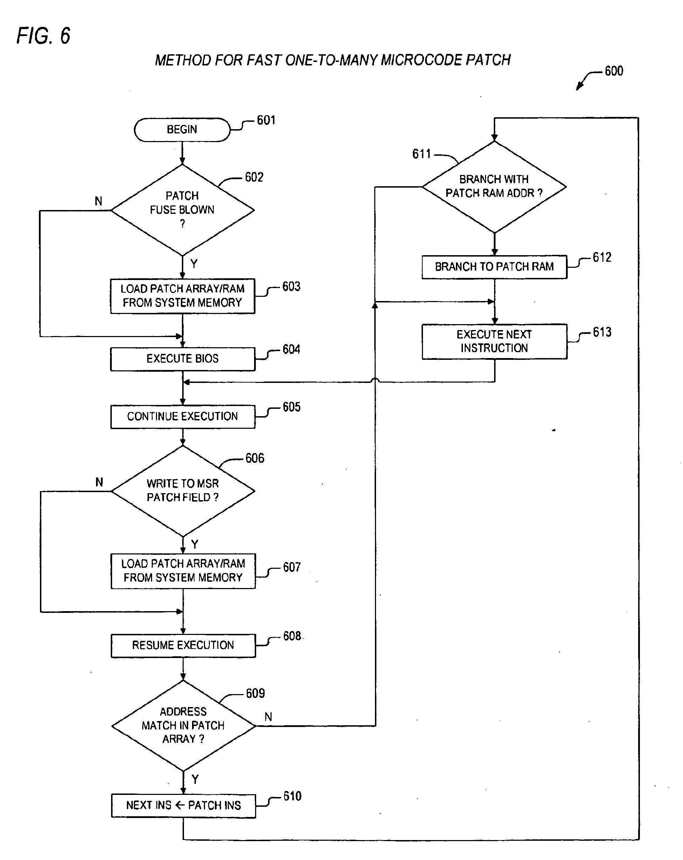

Now referring to FIGURE 6, a flow chart 600 is presented featuring a method according to the present invention for making one-to-many microcode patches. Flow begins at block 601 where a microprocessor according to the present invention undergoes power-up or reset. Flow then proceeds to decision block 602.

At decision block 602, an evaluation is made to determine if a patch fuse 522 within a fuse array 521 in the microprocessor has been blown. If not, then flow proceeds to block 604. If the fuse 522 has been blown, thus indicating that patch data should be loaded into the patch array 512 and patch RAM 551, then flow proceeds to block 603.

At block 603, a patch loader 511 retrieves the patch data from a designated patch data location 534 in BIOS 533 and loads the patch data into the patch array 512 and patch RAM 551. The patch data comprises a microcode branch instruction which is loaded into the patch array 512, where the target address for the microcode branch instruction is a location in the patch RAM 551 for the first micro instruction in the one-to-many microcode patch. The patch data also comprises the one-to-many microcode patch, which is loaded by the patch loader 511 into the patch RAM 551 at the target location. Flow then proceeds to block 604.

At block 604, fetch stage logic begins fetching instructions for execution from BIOS 533 to configure and initialize the microprocessor and processing system. As instructions are executed, flow then proceeds to block 605.

At block 605, instructions within the program flow are successively fetched and executed by the microprocessor. Flow then proceeds to decision block 606.

At decision block 606, an evaluation is made to determine if a patch field 524 within a machine specific register 523 has been set to a state that indicates a patch should be loaded into the patch array 512 and patch RAM 551. If the patch field 524 indicates that a patch should not be loaded, then flow proceeds to block 608. If the patch field 524 indicates that a patch should be loaded, then flow proceeds to block 607.

At block 607, the patch loader 511 retrieves the patch data from a patch data location 332 in system memory 533 and loads the patch data into the patch array 512 and patch RAM 551 as described above with reference to block 604. Flow then proceeds to block 608.

At block 608, instruction fetch and execution by the microprocessor is continued. Macro instructions are directly translated into micro instructions and/or associated micro instructions are retrieved from microcode ROM 505. The addresses of locations in microcode ROM 505 are provided to the patch array 512 in parallel with provision of the addresses to the microcode ROM 505. Flow then proceeds to decision block 609.

At decision block 609, an evaluation is made to determine if a microcode address provided to the patch array 512 matches an address which was loaded. If not then flow proceeds to block 613. If an address does hit in the array 512, then flow proceeds to block 610.

At block 610, the patch array 512 outputs a substitute instruction corresponding to the matched address and asserts signal HIT, thus directing the mux 513 to place the substitute instruction into the instruction register 510 rather than the micro instruction retrieved from the microcode ROM 505. Flow then proceeds to decision block 611.

At decision block 611, an evaluation is made to determine if the substitute instruction in the instruction register 510 is a microcode branch instruction having a target address in the patch RAM 551. If so, the block proceeds to block 612. If not, then flow proceeds to block 613.

At block 612, the microcode branch is performed by providing the branch target address of the microcode branch instruction to bus ADDR, and the location in the patch RAM 551 having the first micro instruction in the one-to-many patch is retrieved. Flow then proceeds to block 613

At block 613, instruction fetch and execution by the microprocessor is continued and flow proceeds to block 605.

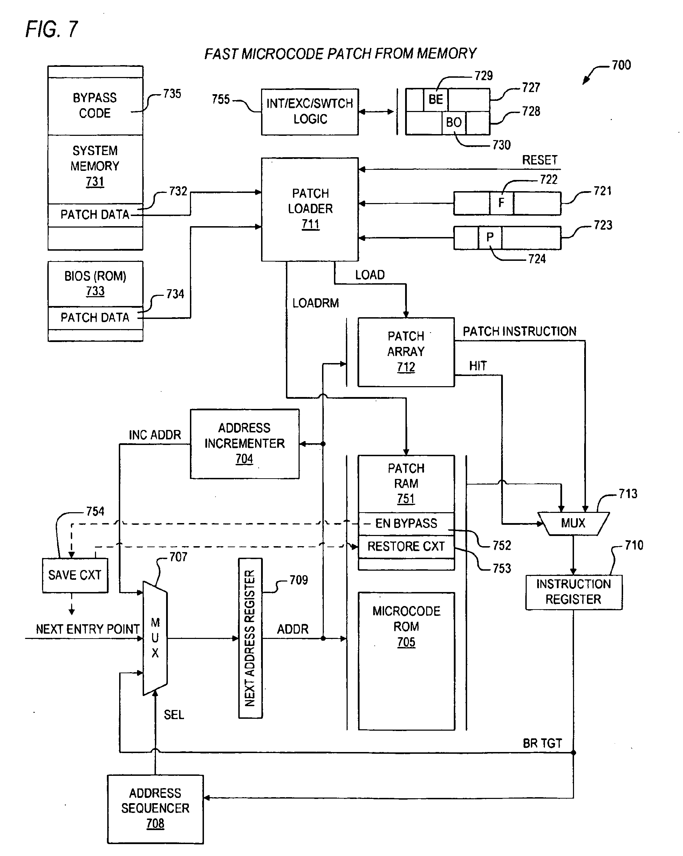

Now that the performance of one-to-one and one-to-many microcode patches according to the present invention has been described, attention is now directed to FIGURES 7-9 where details are presented that enable more flexible testing, simulation, and debug operations to be performed which employ the apparatus and methods previously discussed in a manner that allows microcode patches to be executed from system memory. For purposes of this application, the mode of execution for these patches is called translator bypass mode or native bypass mode. Such a mode of operation has been described above with reference to the discussion of FIGURE 2, where it is disclosed that micro instructions may be interlaced with architectural macro instructions as part of a program flow stored in system memory. In one embodiment, the macro instructions are x86 macro instructions for execution by an x86-compatible microprocessor. Details will now discussed with reference to the following figures that illustrate how a programmer, designer, or debugger would employ aspects of the present invention to enter and exit translator bypass mode, and how native instructions may be interlaced with macro instructions within a program flow for purposes of debugging current microcode routines by inserting microcode instructions which enable access to native resources such as machine specific registers, hidden registers, and the like, and how native instructions corresponding to proposed microcode routines may be tested prior to burning them into ROM. In addition, specific microcode routines may be programmed into system memory and executed therefrom for purposes of boundary conditions testing, in-process testing, hardware debug, and a number of other test activities.

Turning to FIGURE 7, a block diagram is presented detailing an apparatus 700 according to the present invention for performing a microcode patch from system memory. The apparatus 700 is substantially similar to the one-to-many patch apparatus 500 discussed above with reference to FIGURES 5-6, with the addition of elements and features necessary to execute microcode sequences which are stored in memory 731 as opposed to sequences stored in a patch array 712 or patch RAM 751. Operation of elements of the apparatus 700 of FIGURE 7 is substantially similar to the operation of like-numbered elements of the apparatus 500 of FIGURE 5, where the hundreds digit is replaced with a "7."

In addition to elements common to the apparatus 500 of FIGURE 5, the apparatus 700 includes interrupt/execution/switch logic 755 that accesses a bypass enable BE bit 729 within a machine specific register 727 and a bypass on BO bit 730 within a flags register 728. The apparatus 700 also depicts bypass code 735 stored within system memory 731. The bypass code 735 can comprise a plurality of wrapper-encapsulated micro instructions or it can include a program flow of macro instructions having wrapper-encapsulated micro instructions interlaced therein. The bypass code 735 is the program flow that is to be executed by the microprocessor in place of a given micro instruction.

The apparatus 700 additionally shows an enable bypass sequence of micro instructions 752 loaded within the patch RAM 751. The enable bypass sequence 752 is employed by the translate stage to store the context of an immediately preceding macro instruction that is translated and executed prior to entering translator bypass mode. The context is stored in a save context array 754. In one embodiment, the save context array 754 is one or more machine specific registers. Exemplary context information includes the address of the immediately preceding macro instruction, its next sequential instruction pointer, etc. It is required that sufficient information associated with the immediately preceding macro instruction be stored in the save context array 754 so that execution of the normal macro instruction program flow can be restored upon termination of translator bypass mode. For restoring the normal macro instruction flow, a restore context sequence of micro instructions 753 is loaded into the patch RAM 753. To terminate translator bypass mode, a microcode branch instruction is executed in the bypass code 735 that has a branch target address specifying the location of the restore context microcode sequence 753. In one embodiment, the restore context sequence may be permanently stored in the microcode ROM 705 instead of loaded into the patch RAM 751.

In operation, the patch array 712 and patch RAM 751 are loaded as described above. A microcode branch instruction is loaded into the patch array 712 at the microcode ROM address of the micro instruction which is to be replaced, simulated, tested, etc. The microcode branch instruction in the patch array 712 includes a branch target address of a first micro instruction in the enable bypass sequence 752 which is loaded in the patch RAM 751. Hence, when the address of the micro instruction to be replaced is provided on ADDR, the patch array 712 causes the microcode branch instruction to be issued and executed, thus directing flow to the enable bypass sequence 752 in the patch RAM 751. The enable bypass sequence 752 comprises micro instructions that direct the interrupt/execution/switch logic 755 to assert the BE bit 729, thus indicating to translation logic 200, as described with reference to FIGURE 2, that bypass mode is enabled. The last micro instruction in the enable bypass sequence comprises a branch to the bypass code 735 stored within system memory 731. Thereafter, the bypass logic 220 performs those operations necessary to detect the wrapper instructions, strip the native instructions from within the wrapper instructions, and route the native instructions to the native bus 215.

While the microprocessor is in translator bypass mode, interrupts and other task control transfer events (hereinafter collectively referred to as "interrupts") are signaled to the int/exc/swtch logic 755 via known mechanisms. As part of processing an interrupt, the state of bit BE 729 in the register 727 is checked to determine if the microprocessor is in native bypass mode. If so, this state is saved prior to processing the interrupt by asserting bit BO 730 in the flags register 728. It is required that the flags register 728 be an architectural register within the microprocessor whose state is preserved during task control transfers and whose state is restored upon control returns. In an x86 embodiment, the flags register 728 comprises the EFLAGS register in an x86-compatible microprocessor and bit BO 730 comprises bit 31 of the EFLAGS register. If an interrupt occurs when bit BE 729 is asserted (indicating that bypass mode is enabled), then the int/exc/swtch logic 755 asserts the BO bit 730 in the flags register 728 prior to processing the interrupt. In addition, bit BE 729 is cleared, thereby disabling native bypass mode. Should a wrapper macro instruction be encountered within an interrupt service routine or other application to which control has been passed prior to returning from the interrupt, then the instruction translation stage 200 will interpret the wrapper macro instruction according to architectural specifications of the controlling ISA, which in one embodiment comprises causing an exception. In this manner, application programs can employ interlaced native instructions without causing problems for operating system modules that service these events or for other application programs to which program control is transferred.

Upon return from an interrupting event to an application program that employs native bypass mode, the int/exc/swtch logic 755 checks the state of the restored BO bit 730 in the flags register 728. If the bit 730 indicates that native bypass mode was previously enabled, then bit BE 729 is set to re-enable bypass mode. Control is then returned to the application program and subsequent macro instructions (including wrapper instructions) are again executed. The status of the BO bit 730 can also be checked by the application program that employs native bypass mode to determine if an interrupt has occurred that may have changed the state or contents of any native resource that was being used prior to the interrupt occurring. Since native resources are not architecturally specified to persist through interrupting events, an interrupt handler or other application program to which program control was transferred may have changed the state of a native resource currently being used by the application program that employs bypass mode. In an alternative embodiment, the flags register 728 comprises a native register within the microprocessor whose contents are cleared by execution of a native instruction within a program flow while in native bypass mode. According to the alternative embodiment, the int/exc/swtch logic 755 sets the value of this native register 728 to a non-zero value upon return from interrupt, thereby providing a means whereby the native bypass application can determine if an interrupt has occurred. In a further embodiment, the flags register 728 comprises both an architectural flags register having a BO bit 730 and a native register that operate as described above to provide two indications to a native bypass application that an interrupt has occurred.

As noted above, translator bypass mode is terminated by executing a microcode branch to the restore context sequence 753. In one embodiment, the restore context sequence directs the translate stage to reload the macro instruction context stored in the save context array 754 and which directs the interrupt/execution/switch logic 755 to deassert bit BE 729, thus placing the translate stage 200 back in normal operating mode. A final microcode instruction in the restore context sequence 753 is executed indicates to the address sequencer 708 that a final micro instruction in a sequence has been executed and which results in a next entry point being provided to the mux 707 which corresponds to a macro instruction following the one whose context was saved prior to entering translator bypass mode. An alternative embodiment is contemplated as well where the he enable bypass sequence 752 comprises micro instructions that direct the interrupt/execution/switch logic 755 to completely disable interrupts during translator bypass mode operations. According to this embodiment, the only operations that need to be performed in order to preserve context is to save the current interrupt mask, mask the interrupts during translator bypass mode, and then restore the interrupt mask prior to returning to normal operating mode.

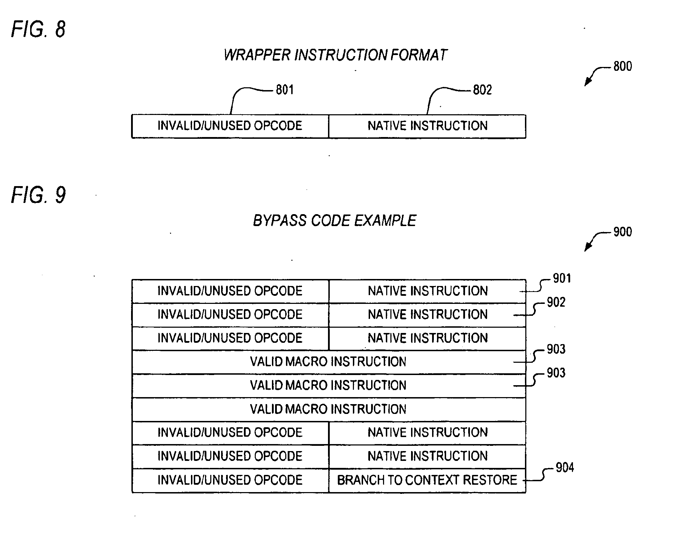

Now turning to FIGURE 8, a block diagram is presented illustrating an exemplary wrapper macro instruction 800 according to the present invention. The wrapper instruction 800 includes an opcode field 801 and a native instruction field 802. In a preferred embodiment, the opcode field comprises an invalid or unused opcode value according to the instruction set architecture which is employed. In an alternative embodiment, a valid opcode may be employed, with the limitation that execution of instructions having the valid opcode are precluded when in translator bypass mode.

The native instruction field 802 comprises one or more micro instructions which are to be executed. In one embodiment, one micro instruction is embedded within the native instruction field 802. In another embodiment, a 38-bit encoding of three micro instructions is embedded within the native instruction field 802. In a third embodiment, a plurality of micro instructions to be sequentially executed are provided in the native instruction field 802.

Referring to FIGURE 9, a diagram 900 is presented showing an of translator bypass code 900 according to the present invention. The diagram 900 depicts a number of wrapper macro instructions 901, 902, 904 interlaced in the program flow 900 that includes several valid macro instructions 903 as well. As noted above, the bypass code 900 is loaded into system memory where address of the first instruction 901 in the code 900 is provided as a branch target address within a last micro instruction within the enable bypass microcode sequence 752 that is loaded into the patch RAM 751. Accordingly, the enable bypass sequence 752 performs those operations necessary to place the microprocessor into translator bypass mode and to perform a branch to the first instruction 901 in the bypass code 900. When the first instruction 901 enters into the translate stage, bypass logic detects the invalid/unused opcode, strips the embedded native instruction from within, and provides the native instruction on the native bus for execution. Subsequently fetched wrapper instructions 902, 904 are similarly processed. In addition, valid macro instructions 903 may be included in the bypass code 900. When the valid macro instructions 903 enter into the translate stage, they are translated by the translator/control ROM accordingly, and their associated micro instructions are provided to the native bus for execution.

When the last wrapper instruction 904 is provided to the translate stage, bypass logic strips the native instruction from within, which is a microcode branch to a first location in the context restore sequence 753 stored within the patch RAM 751. Accordingly, program flow branches to the restore sequence 753, which restores the context for normal operation and terminates translator bypass mode.

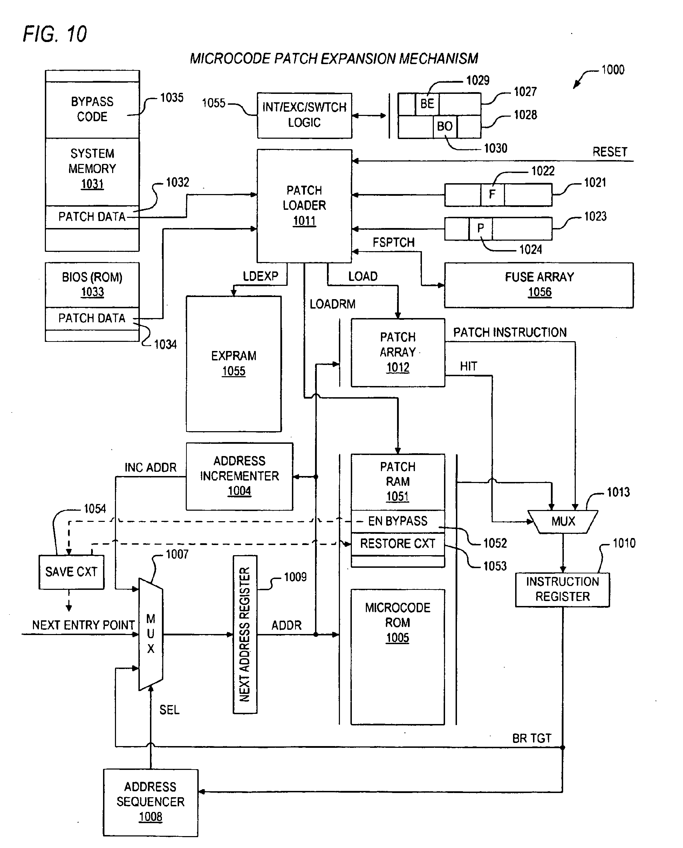

Now referring to FIGURE 10, a block diagram is presented detailing a microcode patch expansion mechanism 1000 according to the present invention. The mechanism 1000 is substantially similar to the patch apparatus 700 discussed above with reference to FIGURES 7-9, with the addition of elements and features which are required to load microcode patches that are programmed during fabrication of a part and which are utilized to expand the capacities of the patch RAM 751 to allow for the implementation of greater numbers of microcode patches. Operation of elements of the apparatus 1000 is substantially similar to operation of like-numbered elements of the apparatus 700 of FIGURE 7, where the hundreds digit is replaced with a "10."

In addition to elements common to the apparatus 700 of FIGURE 7, the mechanism 1000 includes a fuse array 1056 that is coupled to the patch loader 1011 via bus FSPTCH. The mechanism 1000 also includes an expansion RAM EXPRAM 1055 that is coupled to the patch loader 1011 via bus LDEXP. The fuse array 1056 can be programmed during fabrication of a part by blowing selected fuses therein to enable microcode and other types of patches (i.e., constant or machine state updates) to be provided with the part itself rather than requiring distribution of the patches to the field, as is the case for patches 1034, 1032 which must be loaded into BIOS ROM 1033 or system memory 1031. In one embodiment, the fuse array 1056 comprises metal fuses (not shown) disposed on one or more metallization layers of a part (e.g., an integrated circuit die) which can be blown by conventional methods during fabrication of the part. In another embodiment, the fuse array 1056 comprises polymer fuses (not shown) disposed on one or more polymer layers of the part and which are selectively blown by substantially similar techniques. A further embodiment of the fuse array 1056 contemplates a combination of metal and polymer fuses.

The EXPRAM 1055, in one embodiment, comprises a plurality of RAM locations that are addressable by the patch loader 1011 on bus LDEXP and by control circuitry (not shown) to enable overlay or swapping selected locations with corresponding locations in the patch RAM 1051. The purpose of the EXPRAM 1055 is to provide an efficient mechanism for storing microcode patches which are larger than the storage capacity of the patch RAM 1051. An additional purpose of the EXPRAM is to provide for programming and storage of data used to patch mechanisms in the microprocessor other than microcode ROM 1005. For example, one skilled in the art will appreciate that a present day microprocessor comprises hundreds of machine specific registers and associated control circuits, many of which must be initialized following reset. In an embodiment where the initialization states of these registers and circuits are also stored in the EXPRAM 1055, use of the fuse array 1056 enables patching of these initial states prior to the execution of instructions by the microprocessor. In this constant update embodiment, following reset, the states of certain mechanisms, as alluded to above, are typically initialized. Rather than providing workarounds for instances where the mechanisms may be erroneously initialized, the initialization states are "patched" prior to initialization through the use of data provided via the EXPRAM 1055, as will be described in more detail below, is employed to update the states. The aforementioned constant update embodiment describes only one of several uses the EXPRAM for performing patches of machine state data.

In one embodiment, the EXPRAM 1055 comprises an additional one or more banks within an on-chip cache which cannot be accessed by programmable instructions (i.e., macro instructions), but which can be accessed by microcode, that is, the execution of micro instructions. A specific embodiment comprehends an EXPRAM 1055 having 4096 addressable byte locations.

In operation, the EXPRAM 1055 can be loaded via the same mechanisms as are described above with reference to the patch array 712 and the patch RAM 751, that is, via patch data 1032, 1034 located in system memory 1031 or BIOS ROM 1033. And the patch data 1032, 1034 can additionally comprise system control data (such as the initialization values alluded to above). In the case where machine states must be updated prior to the execution of instructions in BIOS 1033, the present invention contemplates programming of the constant patch data in either the designated patch data area 1034 in BIOS ROM 1033 or in the fuse array 1056. Furthermore, the present invention contemplates a designated area of the EXPRAM 1055 that is employed for microcode patches to be swapped and/or overlayed with microcode patches in the patch RAM 1051, as will be described in more specific detail below.

Data which is programmed into the fuse array 1056 is loaded by the patch loader 1011 following transition of signal RESET, but prior to the execution of macro instructions. That is, following reset, micro instructions are executed by the microprocessor which cause the data programmed into the fuse array 1056 to be read and loaded. The data retrieved from the fuse array 1056 is encoded to indicate a target patch unit (i.e., the patch array 1012, patch RAM 1051, or EXPRAM 1055), location within the target unit, and other information, as will be described in further detail below.

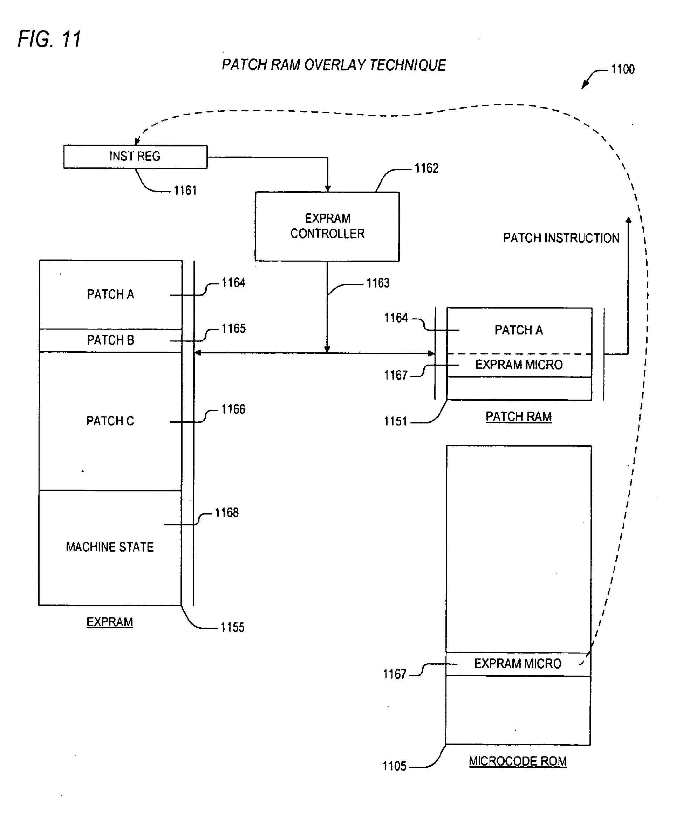

Following reset and subsequent loading of the data from the fuse array 1056 into targeted patch units, elements of the mechanism 1000 operate in substantially the same manner as has been described above with reference to FIGURES 2-9, with the exception that microcode patch swapping and overlay is provided for by the addition of the EXPRAM 1055, which will now be described in more detail with reference to FIGURE 11.

Turning to FIGURE 11, a block diagram 1100 is now presented showing details of a patch RAM overlay technique as employed in a microprocessor according to the present invention. The diagram 1100 includes a microcode ROM 1105, a patch RAM 1151, and an expansion RAM EXPRAM 1155 as have been discussed above with reference to preceding FIGURES. The diagram 1100 also includes an EXPRAM controller 1162 that is coupled to both the patch RAM 1151 and the EXPRAM 1155 via bus 1163, and which provides control over the two patch units 1151, 1155 for purposes of swapping and/or overlaying microcode patches. The EXPRAM controller 1162 is coupled to a micro instruction register 1161 and receives micro instructions for execution which have been directed thereto by micro instruction dispatch circuits (not shown) in the microprocessor. In addition, the patch instruction bus is shown, over which addressed patch micro instructions are provided to the mux 1013.

For purposes of teaching the present invention, the diagram 1100 shows three microcode patches: patch A 1164, patch B 1165, and patch C 1166. Patches A-C 1164-1166 comprise one or more micro instructions, as described herein, which have been loaded via any of the three microcode patch loading techniques described above, that is, loaded from the fuse array, loaded from BIOS ROM (either prior to the initiation of execution of BIOS macro instructions or after), or loaded from system memory/cache. Patch A 1164 is shown as being both in the patch RAM 1151 and in the EXPRAM 1155. Patch A 1164 could have been loaded by the techniques described above in both the patch RAM 1151 and in the EXPRAM 1155, or it could have been loaded initially into the EXPRAM 1155 and overlayed into the patch RAM 1151 through execution of one or more EXPRAM micro instructions 1167, the operation of which will now be discussed.

The present invention contemplates one or more EXPRAM micro instructions 1167 that are configured to direct the EXPRAM controller 1162 to move data between the EXPRAM 1155 and the patch RAM 1151. The present invention also contemplates one or more EXPRAM microcode routines that are configured to direct the EXPRAM controller 1162 to move data between the EXPRAM 1155 and the patch RAM 1151, where each of the microcode routines include a plurality of micro instructions. Accordingly, for clarity purposes, the following discussion will employ the term EXPRAM micro instructions 1167, where it is noted that the aforementioned microcode routines are also comprehended. One embodiment contemplates a swap EXPRAM micro instruction that directs the EXPRAM controller 1162 to swap the contents of one or more designated locations in the patch RAM 1151 with one or more prescribed locations in the EXPRAM 1155. Another embodiment contemplates and overlay EXPRAM micro instruction that directs the EXPRAM controller 1162 to overlay one or more designated locations in the patch RAM 1151 with the contents of one or more prescribed locations in the EXPRAM 1155. Other embodiments comprising various modifications to the swap and overlay micro instructions are contemplated as well. For clarity purposes, these embodiments are shown in the diagram 1100 as a single EXPRAM micro instruction 1167, however it is noted that a plurality of EXPRAM micro instructions 1167 may be employed to perform an overlay or a swap, and various forms of designating and prescribing locations in the EXPRAM 1155 and patch RAM 1151 are comprehended by the present invention.

In one embodiment, an EXPRAM micro instruction 1167 may be resident in the microcode ROM 1105 and a microcode branch instruction is executed to perform a branch to the location in microcode ROM 1105 where the EXPRAM micro instruction 1167 is stored. Source and destination address parameters may be passed as well to designate the areas in patch RAM 1151 and EXPRAM 1155 which are to be swapped or overlayed.

Another embodiment contemplates an EXPRAM micro instruction 1167 which is provided as part of a patch 1164, such as is shown in the patch RAM 1151, to enable swap or overlay of subsequent patch instructions.

In operation, as an EXPRAM micro instruction 1167 is routed through the instruction register 1161 for execution by the EXPRAM controller 1162, the EXPRAM controller 1162 moves the prescribed contents of the EXPRAM 1155 and the designated contents of the patch RAM 1151 between the two patch units 1151, 1155 via bus 1163 to provide for overlay and/or swap of their contents, thus enabling greater numbers of patches 1164-1166 to be provided for according to the present invention. In on embodiment, the EXPRAM controller 1162 that comprises a plurality of microcode routines disposed within the microcode ROM and/or the patch RAM 1151.

In addition, as was alluded to above, the EXPRAM also comprises a machine state area 1168 that is employed by other control circuits (not shown) in the microprocessor, such as hidden registers that are employed to maintain the state of the machine. The machine state area 1168 does not contain patch micro instructions, but locations therein can be loaded via any of the three patch loading techniques described earlier.

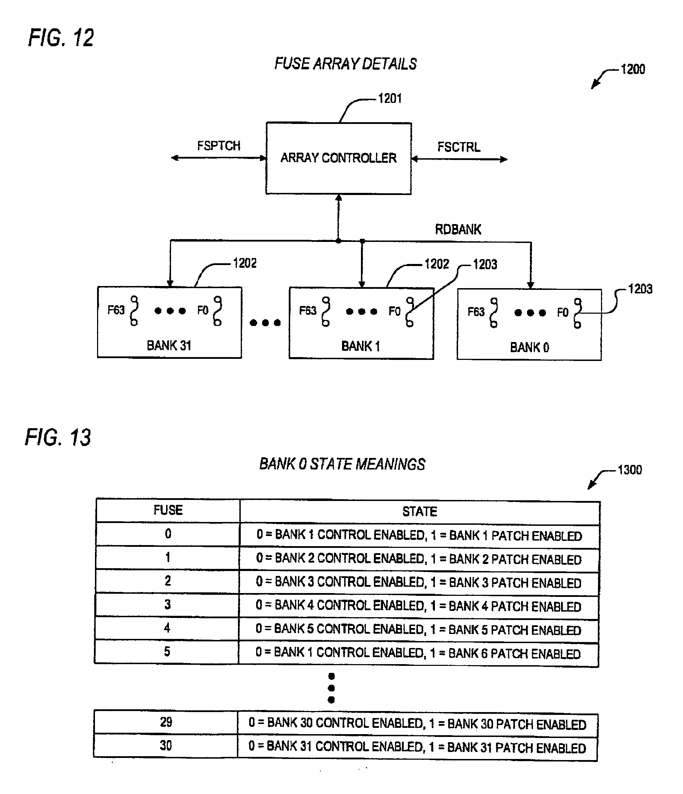

Now turning to FIGURE 12, a block diagram is presented depicting a fuse array mechanism 1200 for implementing a microcode patch during fabrication. The mechanism 1200 includes an array controller 1201 that is coupled to a plurality of fuse banks 1202 via bus RDBANK. Each of the plurality of fuse banks 1202 include a plurality of fuses 1203. In the embodiment shown, the fuse array 1200 includes 32 fuse banks BANK [31:0] 1202, each having 64 fuses F[63:0] 1203.

As noted above, the present invention contemplates metal or poly fuses 1203, or a combination of metal and poly fuses 1203. The present invention also comprehends electrical and laser fuses. Via bus RDBANK, the array controller 1201 reads the state of each of the fuses F[63:0] in each of the fuse banks BANK[31:0], as directed by the patch loader (not shown), which is coupled to the array controller 1201 via bus FSPTCH. A fuse control bus FSCTRL also couples the array controller 1201 to control circuits (not shown) in the microprocessor to enable control information that has been encoded into one or more fuses 1203 in one or more of the fuse banks 1202 to be provided thereto.

Operationally, following reset, but prior to execution of BIOS instructions, part of a reset microcode routine routes micro instructions to the patch loader that cause the contents of the fuse array 1200 to be read and distributed to the control circuits (via bus FSCTRL, or to any one of the three patch mechanisms described above via bus FSPTCH, that is, to the patch array, the patch RAM, or the EXPRAM.

Referring to FIGURE 13, a table 1300 is presented showing exemplary meanings of the states of fuses within fuse bank 0 in the fuse array of FIGURE 12. In one embodiment, one or more fuse banks 1202 in the fuse array 1200 are configured to include one or more fuses 1203 which are encoded to indicate whether a corresponding bank of fuses is encoded either with control information or with patch information. One embodiment contemplates a reconfigurable mechanism for encoding patch information as is shown in the table 1300, where fuses 30:0 are encoded to indicate whether banks 31:1 are programmed with control information or with patch information. As shown in the table, if the fuse state is equal to a logical "0," then its corresponding fuse bank contains control information. If the fuse state is equal to a logical "1," then its corresponding fuse bank contains patch information. Logical states as noted are determined by known means.

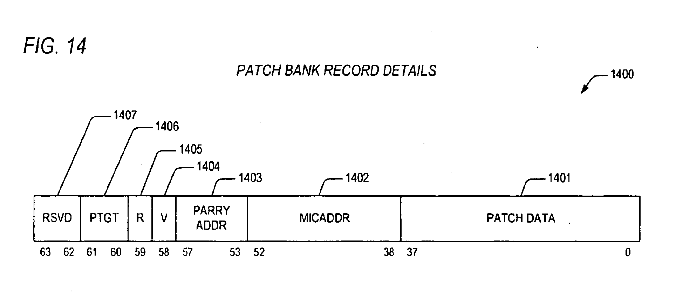

Now turning to FIGURE 14, a block diagram is presented showing fields within an exemplary patch bank record 1400 according to the present invention, such as may be programmed into fuse banks 31:1 for purposes of encoding a microcode patch, including a machine state which is stored in the EXPRAM machine state area discussed with reference to FIGURE 11. The patch bank record 1400 corresponds to the state of 64 fuses in the fuse bank, as noted in the diagram. Fuses 37:0 are employed to specify a 38-bit patch data field 1401, thus enabling a 38-bit microcode patch to be prescribed. Fuses 52:38 are employed to specify a 15-bit address 1402 in microcode address space, thus prescribing a location in either the microcode ROM or the patch RAM. Fuses 57:53 are employed to specify a 5-bit address 1403 in the patch array. Fuse 58 1404 is employed to indicate whether or not the data in the patch bank record 1400 is valid. Fuse 59 1405 is employed to indicate whether the record 1400 can be read.. Fuses 61:60 are encoded to indicate a patch target field 1406, that is, the patch array ("00"), the patch RAM ("01"), or the EXPRAM ("10"). Value "11" is reserved. And finally, fuses 63:62 indicate a reserved data field 1407.

Those skilled in the art should appreciate that they can readily use the disclosed conception and specific embodiments as a basis for designing or modifying other structures for carrying out the same purposes of the present invention, and that various changes, substitutions and alterations can be made herein without departing from the scope of the invention as defined by the appended claims.

## Claims

1. A patch apparatus in a microprocessor, comprising:
a plurality of fuse banks (1202), configured to store associated patch records that are employed to patch microcode or machine state circuits in the microprocessor or to store associated control data entities that are employed to program control circuits in the microprocessor;
one or more configuration fuse banks (1202), encoded to indicate whether each of said plurality of fuse banks is programmed with one of said associated patch records or with one of said associated control data entities; and
an array controller (1201), coupled to said plurality of fuse banks, configured to read said plurality of fuse banks, and configured to provide said associated patch records to a patch loader (311, 511, 711, 1011) or said associated control data entities to control circuits in the microprocessor, wherein said patch loader provides patches corresponding to said associated patch records, as prescribed, to designated target patch mechanisms in the microprocessor;
wherein said patch loader provides said patches to said designated target patch mechanisms following transition of a microprocessor reset signal and prior to execution of instructions stored in a BIOS ROM (333, 533, 733, 1033).

2. The patch apparatus as recited in claim 1, wherein each of said one or more configuration fuse banks comprises a plurality of fuses (1203), and wherein the state of each of said plurality of fuses designates a corresponding one of said a plurality of fuse banks as having a patch record or as having a control data entity programmed therein.

3. The patch apparatus as recited in claim 1, wherein each of said plurality of fuse banks comprises 64 fuses, and wherein each of said 64 fuses corresponds to a bit in a patch record.

4. The patch apparatus as recited in claim 1, wherein said plurality of fuse banks are programmed during fabrication of the microprocessor.

5. The patch apparatus as recited in claim 1, wherein each of said associated patch records comprises:
a patch data field (1401), for prescribing a corresponding one of said patches;
a microcode address field (1402), for prescribing an address in microcode address space;
a patch array address field (1403), for prescribing an address in a patch array; and
a patch target field (1406), for specifying one of said designated patch mechanisms in the microprocessor.

6. The patch apparatus as recited in claim 1, wherein some of said patches each comprises state data for patching said machine state circuits within the microprocessor.

7. The patch apparatus as recited in claim 1, wherein one of said designated patch mechanisms comprises a patch array (312, 512, 712, 1012) within a translate stage of the microprocessor.

8. The patch apparatus as recited in claim 1, wherein one of said designated patch mechanisms comprises a patch RAM (551, 751, 1051) within a translate stage of the microprocessor, said patch RAM including addresses within microcode ROM address space.

9. The patch apparatus as recited in claim 1, wherein one of said designated patch mechanisms comprises:
an expansion RAM (1055), coupled to a patch RAM, configured to store said patches, wherein a first one or more of said patches are to be executed by the microprocessor in place of a corresponding one or more micro instructions, and wherein a second one or more of said patches are employed to patch a corresponding one or more of said machine state circuits.

10. A method for selectively providing patches or control data during fabrication of a microprocessor, comprising:
programming a plurality of fuse banks (1202) during fabrication of the microprocessor to store associated patch records that are employed to patch microcode or circuits in the microprocessor, or to store associated control data entities that are employed to program control circuits in the microprocessor;
encoding one or more configuration fuse banks during fabrication of the microprocessor to indicate whether each of the plurality of fuse banks is programmed with one of the associated patch records or with one of the associated control data entities;
following transition of a microprocessor reset signal and prior to execution of instructions stored in a BIOS ROM (333, 533, 733, 1033), reading the plurality of fuse banks and the one or more configuration fuse banks; and
providing patches corresponding to the associated patch records, as prescribed, to designated target patch mechanisms in the microprocessor, and programming the control circuits.

11. The method as recited in claim 10, wherein each of the one or more configuration fuse banks comprises a plurality of fuses (1203), and wherein the state of each of the plurality of fuses designates a corresponding one of the plurality of fuse banks as having a patch record or as having a control data entity programmed therein.

12. The method as recited in claim 10, wherein each of the plurality of fuse banks comprises 64 fuses, and wherein each of the 64 fuses corresponds to a bit in a patch record.

13. The method as recited in claim 10, further comprising:
specifying a patch array (312, 512, 712, 1012) within a translate stage of the microprocessor as one of the designated patch mechanisms.

14. The method as recited in claim 10, further comprising:
specifying a patch RAM (551, 751, 1051) within a translate stage of the microprocessor as one of the designated patch mechanisms, wherein the patch RAM includes addresses within microcode ROM address space.

15. The method as recited in claim 10, further comprising:
specifying an expansion RAM (1055) as one of the designated patch mechanisms, wherein the expansion RAM is configured to store the patches, and wherein a first one or more of the patches are to be executed by the microprocessor in place of a corresponding one or more micro instructions, and wherein a second one or more of the patches are employed to patch a corresponding one or more of the circuits.

## Patentansprüche

1. Korrekturvorrichtung in einem Mikroprozessor, umfassend:
eine Anzahl Module mit programmierbaren Verbindungen (1202), die dafür konfiguriert sind, zugehörige Korrektureinträge zu speichern, die dazu verwendet werden, Mikrocode- oder Maschinenstatus-Schaltkreise in dem Mikroprozessor zu korrigieren, oder dafür, zugehörige Steuerdatenentitäten zu speichern, die dazu verwendet werden, Steuerschaltungen in dem Mikroprozessor zu programmieren;
ein oder mehrere Konfigurationsmodule mit programmierbaren Verbindungen (1202), die dafür codiert sind, anzuzeigen, ob jedes Modul der Anzahl Module mit programmierbaren Verbindungen mit einem Eintrag der zugehörigen Korrektureinträge programmiert ist oder mit einer Entität der zugehörigen Steuerdatenentitäten; und
einen Anordnungscontroller (1201), der mit der Anzahl Module mit programmierbaren Verbindungen verbunden ist und der dafür konfiguriert ist, die Anzahl Module mit programmierbaren Verbindungen zu lesen, und dafür, die zugehörigen Korrektureinträge an einen Korrekturlader (311, 511, 711, 1011) zu liefern oder die zugehörigen Steuerdatenentitäten an Steuerschaltungen in dem Mikroprozessor, wobei der Korrekturlader Korrekturen, die den zugehörigen Korrektureinträgen entsprechen, wie vorgeschrieben, an bezeichnete Zielkorrekturmechanismen in dem Mikroprozessor liefert;
wobei der Korrekturlader nach dem Übergang eines Mikroprozessor-Rücksetzsignals und vor dem Ausführen der in einem BIOS-ROM (333, 533, 733, 1033) gespeicherten Befehle die Korrekturen an die bezeichneten Zielkorrekturmechanismen liefert.

2. Korrekturvorrichtung nach Anspruch 1, wobei jedes Modul der einen oder mehreren Konfigurationsmodule mit programmierbaren Verbindungen eine Anzahl programmierbarer Verbindungen (1203) umfasst, und worin der Status einer jeden Verbindung der Anzahl programmierbarer Verbindungen ein zugehöriges Modul der Module mit programmierbaren Verbindungen als ein Modul ausweist, das einen Korrektureintrag besitzt oder dem eine Steuerdatenentität einprogrammiert ist.

3. Korrekturvorrichtung nach Anspruch 1, wobei jedes Modul der Anzahl Module mit programmierbaren Verbindungen 64 programmierbare Verbindungen umfasst, und wobei jede der 64 programmierbaren Verbindungen einem Bit in einem Korrektureintrag entspricht.

4. Korrekturvorrichtung nach Anspruch 1, wobei die Anzahl Module mit programmierbaren Verbindungen während der Herstellung des Mikroprozessors programmiert werden.

5. Korrekturvorrichtung nach Anspruch 1, wobei jeder Eintrag der zugehörigen Korrektureinträge umfasst:
ein Korrekturdatenfeld (1401), das eine entsprechende Korrektur vorschreibt;
ein Mikrocode-Adressfeld (1402), das eine Adresse im Mikrocode-Adressraum vorschreibt;
ein Korrekturanordnungs-Adressfeld (1403), das eine Adresse in einer Korrekturanordnung vorschreibt; und
ein Korrekturzielfeld (1406), das einen der bezeichneten Korrekturmechanismen in dem Mikroprozessor spezifiziert.

6. Korrekturvorrichtung nach Anspruch 1, wobei einige der Korrekturen jeweils Statusdaten zum Korrigieren der Maschinenstatusschaltungen innerhalb des Mikroprozessors enthalten.

7. Korrekturvorrichtung nach Anspruch 1, wobei einer der bezeichneten Korrekturmechanismen eine Korrekturanordnung (312, 512, 712, 1012) innerhalb einer Übersetzungsstufe des Mikroprozessors umfasst.

8. Korrekturvorrichtung nach Anspruch 1, wobei einer der bezeichneten Korrekturmechanismen ein Korrektur-RAM (551, 751, 1051) innerhalb einer Übersetzungsstufe des Mikroprozessors umfasst, und das Korrektur-RAM Adressen innerhalb des Mikrocode-ROM-Adressraums enthält.

9. Korrekturvorrichtung nach Anspruch 1, wobei einer der bezeichneten Korrekturmechanismen umfasst:
ein Erweiterungs-RAM (1055), das mit dem Korrektur-RAM verbunden ist und dafür konfiguriert ist, die Korrekturen zu speichern, wobei eine erste Korrektur oder mehrere Korrekturen von dem Mikroprozessor anstelle eines oder mehrerer zugeordneter Mikrobefehle auszuführen sind, und wobei eine zweite Korrektur oder mehrere Korrekturen dazu verwendet werden, eine oder mehrere zugeordnete Maschinenstatusschaltungen zu korrigieren.

10. Verfahren zum gezielten Bereitstellen von Korrekturen oder Steuerdaten während der Herstellung eines Mikroprozessors, umfassend:
das Programmieren einer Anzahl Module mit programmierbaren Verbindungen (1202) während der Herstellung des Mikroprozessors, damit zugehörige Korrektureinträge gespeichert werden, die zum Korrigieren von Mikrocode oder Schaltungen in dem Mikroprozessor verwendet werden, oder damit zugehörige Steuerdatenentitäten gespeichert werden, die zum Programmieren von Steuerschaltungen im Mikroprozessor dienen;
das Codieren einer oder mehrerer Konfigurationsmodule mit programmierbaren Verbindungen während der Herstellung des Mikroprozessors, damit angezeigt wird, ob jedes Modul der Anzahl Module mit programmierbaren Verbindungen mit einem der zugehörigen Korrektureinträge programmiert ist oder mit einer der zugehörigen Steuerdatenentitäten;
nach dem Übergang eines Mikroprozessor-Rücksetzsignals und vor dem Ausführen der in einem BIOS-ROM (333, 533, 733, 1033) gespeicherten Befehle das Lesen der Anzahl Module mit programmierbaren Verbindungen und der einen oder mehreren Konfigurationsmodule mit programmierbaren Verbindungen; und
das Bereitstellen von Korrekturen, die den zugehörigen Korrektureinträgen entsprechen, wie vorgeschrieben, an bezeichnete Zielkorrekturmechanismen in dem Mikroprozessor, und das Programmieren der Steuerschaltungen.

11. Verfahren nach Anspruch 10, wobei jedes Modul der einen oder mehreren Konfigurationsmodule mit programmierbaren Verbindungen eine Anzahl programmierbarer Verbindungen (1203) umfasst, und worin der Status einer jeden Verbindung der Anzahl programmierbarer Verbindungen ein zugehöriges Modul der Anzahl Module mit programmierbaren Verbindungen als ein Modul ausweist, das einen Korrektureintrag besitzt oder dem eine Steuerdatenentität einprogrammiert ist.

12. Verfahren nach Anspruch 10, wobei jedes Modul der Anzahl Module mit programmierbaren Verbindungen 64 programmierbare Verbindungen umfasst, und wobei jede der 64 programmierbaren Verbindungen einem Bit in einem Korrektureintrag entspricht.

13. Verfahren nach Anspruch 10, zudem umfassend:
das Spezifizieren einer Korrekturanordnung (312, 512, 712, 1012) innerhalb einer Übersetzungsstufe des Mikroprozessors als einen der bezeichneten Korrekturmechanismen.

14. Verfahren nach Anspruch 10, zudem umfassend:
das Spezifizieren eines Korrektur-RAM (551, 751, 1051) innerhalb einer Übersetzungsstufe des Mikroprozessors als einen der bezeichneten Korrekturmechanismen, wobei das Korrektur-RAM Adressen innerhalb des Mikrocode-ROM-Adressraums enthält.

15. Verfahren nach Anspruch 10, zudem umfassend:
das Spezifizieren eines Erweiterungs-RAM (1055) als einen der bezeichneten Korrekturmechanismen, wobei das Erweiterungs-RAM dafür konfiguriert ist, die Korrekturen zu speichern, wobei eine erste Korrektur oder mehrere Korrekturen von dem Mikroprozessor anstelle eines oder mehrerer zugeordneter Mikrobefehle auszuführen sind, und wobei eine zweite Korrektur oder mehrere Korrekturen dazu verwendet werden, eine oder mehrere zugeordnete Schaltungen zu korrigieren.

## Revendications

1. Appareil de correction dans un microprocesseur, comprenant :
une pluralité de bancs de fusibles (1202), configurés pour stocker des enregistrements de programmes de correction associés qui sont utilisés pour corriger un microcode ou des circuits de machine à état dans le microprocesseur ou pour stocker des entités de données de commande associées qui sont employées pour programmer des circuits de commande dans le microprocesseur ;
un ou plusieurs bancs de fusibles (1202) de configuration, encodés pour indiquer si chacun de ladite pluralité de bancs de fusibles est programmé avec l'un desdits enregistrements de programmes de correction associés ou avec l'une desdites entités de données de commande associées ; et
une unité de commande matricielle (1201), couplée à ladite pluralité de bancs de fusibles, configurée pour lire ladite pluralité de bancs de fusibles, et configurée pour fournir lesdits enregistrements de programmes de correction associés à un chargeur (311, 511, 711, 1011) de programmes de correction ou lesdites entités de données de commande associées pour commander des circuits dans le microprocesseur, où ledit chargeur de programmes de correction fournit des programmes de correction correspondant auxdits enregistrements de programmes de correction associés, comme prescrit, à des mécanismes de correction cibles désignés dans le microprocesseur ;
dans lequel ledit chargeur de programmes de correction fournit lesdits programmes corrections auxdits mécanismes de correction cibles désignés suite à une transition d'un signal de réinitialisation de microprocesseur et avant l'exécution d'instructions stockées dans une ROM BIOS (333, 533, 733, 1033).

2. Appareil de correction selon la revendication 1, dans lequel chacun dudit un ou plusieurs bancs de fusibles de configuration comprend une pluralité de fusibles (1203), et où l'état de chacun de ladite pluralité de fusibles désigne un banc de fusibles correspondant de ladite pluralité de bancs de fusibles comme ayant un enregistrement de programme de correction ou comme ayant une entité de données de commande programmées dedans.

3. Appareil de correction selon la revendication 1, dans lequel chacun de ladite pluralité de bancs de fusibles comprend 64 fusibles, et où chacun desdits 64 fusibles correspond à un bit dans un enregistrement de programme de correction.

4. Appareil de correction selon la revendication 1, dans lequel ladite pluralité de bancs de fusibles sont programmés lors de la fabrication du microprocesseur.

5. Appareil de correction selon la revendication 1, dans lequel chacun desdits enregistrements de programmes de correction associés comprend :
un champ (1401) de données de correction, pour prescrire un programme de correction correspondant parmi lesdits programmes de correction ;
un champ (1402) d'adresse de microcode, pour prescrire une adresse dans un espace d'adresse de microcode ;
un champ (1403) d'adresse de réseau de programmes de correction, pour prescrire une adresse dans un réseau de programmes de correction; et
un champ cible (1406) de programme de correction, pour spécifier l'un desdits mécanismes de correction désignés dans le microprocesseur.

6. Appareil de correction selon la revendication 1, dans lequel certains desdits programmes de correction comprennent chacun des données d'état pour corriger lesdits circuits de machine à état dans le microprocesseur.

7. Appareil de correction selon la revendication 1, dans lequel l'un desdits mécanismes de correction désignés comprend un réseau (312, 512, 712, 1012) de programmes de correction dans un étage de traduction du microprocesseur.

8. Appareil de correction selon la revendication 1, dans lequel l'un desdits mécanismes de correction désignés comprend une RAM (551, 751, 1051) de programmes de correction dans un étage de traduction du microprocesseur, ladite RAM de programmes de correction comportant des adresses dans un espace d'adresse ROM de microcode.

9. Appareil de correction selon la revendication 1, dans lequel l'un desdits mécanismes de correction désignés comprend :
une RAM d'expansion (1055), couplée à une RAM de programmes de correction, configurée pour stocker lesdits programmes de correction, où un ou plusieurs premiers programmes de correction parmi lesdits programmes de correction doivent être exécutés par le microprocesseur à la place d'une ou de plusieurs micro-instructions correspondantes, et où un ou plusieurs deuxièmes programmes de correction parmi lesdits programmes de correction sont utilisés pour corriger un ou plusieurs circuits de machine à état correspondants parmi lesdits circuits de machine à état.

10. Procédé destiné à fournir de manière sélective des programmes de correction ou des données de commande lors de la fabrication d'un microprocesseur, comprenant le fait :
de programmer une pluralité de bancs de fusibles (1202) lors de la fabrication du microprocesseur pour stocker des enregistrements de programmes de correction associés qui sont employés pour corriger des circuits ou un microcode dans le microprocesseur, ou pour stocker des entités de données de commande associées qui sont employées pour programmer des circuits de commande dans le microprocesseur ;
d'encoder un ou plusieurs bancs de fusibles de configuration lors de la fabrication du microprocesseur pour indiquer si chacun de la pluralité de bancs de fusibles est programmé avec l'un des enregistrements de programmes de correction associés ou avec l'une des entités de données de commande associées ;
de lire la pluralité de bancs de fusibles et l'un ou les plusieurs bancs de fusibles de configuration, suite à la transition d'un signal de réinitialisation de microprocesseur et avant l'exécution d'instructions stockées dans une ROM BIOS (333, 533, 733, 1033) ; et
de fournir des programmes de correction correspondants aux enregistrements de programmes de correction associés, comme prescrit, à des mécanismes de correction cibles désignés dans le microprocesseur, et programmer les circuits de commande.

11. Procédé selon la revendication 10, dans lequel chacun du ou des plusieurs bancs de fusibles de configuration comprend une pluralité de fusibles (1203), et dans lequel l'état de chacun de la pluralité de fusibles désigne un banc de fusible correspondant de la pluralité de bancs de fusibles comme ayant un enregistrement de programme de correction ou comme ayant une entité de données de commande programmées dedans.

12. Procédé selon la revendication 10, dans lequel chacun de la pluralité de bancs de fusibles comprend 64 fusibles, et dans lequel chacun des 64 fusibles correspond à un bit dans un enregistrement de programme de correction.

13. Procédé selon la revendication 10, comprenant en outre le fait :
de spécifier un réseau (312, 512, 712, 1012) de programmes de correction dans un étage de traduction du microprocesseur comme l'un des mécanismes de correction désignés.

14. Procédé selon la revendication 10, comprenant en outre le fait :
de spécifier une RAM (551, 751, 1051) de programmes de correction dans un étage de traduction du microprocesseur comme l'un des mécanismes de correction désignés, dans lequel la RAM de programmes de correction comporte des adresses dans un espace d'adresses ROM de microcode.

15. Procédé selon la revendication 10, comprenant en outre le fait :
de spécifier une RAM d'expansion (1055) comme l'un des mécanismes de correction désignés, où la RAM d'expansion est configurée pour stocker les programmes de correction, et où un ou plusieurs premiers programmes de correction parmi les programmes de correction doivent être exécutés par le microprocesseur à la place d'une ou de plusieurs micro-instructions correspondantes, et où un ou plusieurs deuxièmes programmes de correction parmi les programmes de correction sont utilisés pour corriger un ou plusieurs circuits correspondants parmi les circuits.
